# EUROPEAN PATENT APPLICATION

(11) **EP 4 826 543 A1**
(43) Date of publication of application: **21.10.2026**
(21) Application number: 24904004.9
(22) Date of filing: 12.11.2024
(51) Int. Cl.: G06F 11/14, G06F 8/65, G06F 8/71, H04L 67/00, G06F 21/64, G06F 21/31, G06F 9/451

(54) **SIGNAL PROCESSING DEVICE, VEHICLE CONTROL DEVICE HAVING SAME, AND OPERATION METHOD THEREOF**

(30) Priority: 14.12.2023 KR 20230181420
(71) Applicant: LG Electronics Inc., Yeongdeungpo-gu Seoul 07336 (KR)
(72) Inventor: LEE, Hyowoo, Seoul 06772 (KR)
(74) Representative: Vossius & Partner Patentanwälte Rechtsanwälte mbB
(86) International application number: PCT/KR2024/017885
(87) International publication number: WO 2025/127438

(57) **Abstract**

A signal processing device includes a processor configured to process data received from a server through Over The Air (OTA) method, wherein the processor determines whether a software subject to update based on the data received from the server is a predetermined software which is previously set to be able to be updated while a vehicle is in operation, if the software subject to update is the predetermined software, performs an update for the software subject to update, based on the data received from the server, if the software subject to update is not the predetermined software, determines whether a predetermined condition for safety at the end of the operation of the vehicle is satisfied, and in response to the satisfaction of the predetermined condition, performs the update for the software subject to update.

## Description

### [Technical Field]

This disclosure relates to a signal processing device, a vehicle control device having the same, and an operating method thereof, and more particularly, to a signal processing device that acquires data by using an Over The Air (OTA) method and updates software, a vehicle control device having the same, and an operating method thereof.

### [Background Art]

A vehicle is a device that moves in a direction desired by a user riding in the vehicle. A representative example is an automobile. For the convenience of a user using a vehicle, a vehicle signal processing device is installed inside the vehicle. The vehicle signal processing device can execute various services, based on various sensor data from a sensor device or camera data from a camera.

Meanwhile, a vehicle is equipped with various electronic devices, and software for using the electronic devices is installed in the vehicle. Such software may require updates, upgrades, reprogramming, or replacement in order to correct existing errors, change to a new version, etc.

In the related art, in order to update the vehicle's software, there was an inconvenience of having to move a vehicle to a location equipped with equipment for updating the software. In addition, when a user directly updates the vehicle's software, there was an inconvenience in that the data for the software update had to be stored in an external device, the external device had to be connected to the vehicle, and then a program had to be executed so that the vehicle's software would be updated.

Recently, in order to resolve the inconvenience related to software updates, various studies have been conducted on a method for wirelessly updating the vehicle's software by using the Over The Air (OTA) method. When using the OTA method, the vehicle wirelessly downloads data for software updates from a server and performs software updates by using the downloaded data.

If software updates are performed while a vehicle is driving, there is a problem that safety issues may occur due to software updates related to driving. In addition, even if software updates are performed while a vehicle is not driving, when a user starts the vehicle and operates the vehicle while the update is being performed, a process is necessary for follow-up processing of incomplete updates, processing of downloaded data, etc. In addition, if software updates are performed while there exist passengers in a vehicle, there may occur a problem that passengers are unable to get out of the vehicle as vehicle's functions are restricted. In addition, there is an increasing demand for methods to optimize the process of updating software, such as reducing the size of data downloaded by using the OTA method or preventing repeated software updates.

### [Disclosure of invention]

### [Technical Problem]

It is an objective of the present disclosure to solve the above and other problems.

It is another objective of the present disclosure to provide a signal processing device capable of performing a software update while considering safety conditions during vehicle operation, a vehicle control device having the same, and an operating method thereof.

It is another objective of the present disclosure to provide a signal processing device capable of performing a software update while considering whether the vehicle operation is completely terminated, a vehicle control device having the same, and an operating method thereof.

It is another objective of the present disclosure to provide a signal processing device capable of minimizing the amount of data downloaded wirelessly for software updates, a vehicle control device having the same, and an operating method thereof.

It is another objective of the present disclosure to provide a signal processing device capable of updating software according to an optimized process while considering the state of a vehicle, a vehicle control device having the same, and an operating method thereof.

### [Solution to Problem]

In accordance with an embodiment of the present disclosure, a signal processing device includes a processor configured to process data received from a server through Over The Air (OTA) method, in which the processor determines whether a software subject to update based on the data received from the server is a predetermined software which is previously set to be able to be updated while a vehicle is in operation, if the software subject to update is the predetermined software, performs an update for the software subject to update, based on the data received from the server, if the software subject to update is not the predetermined software, determines whether a predetermined condition for safety at the end of the operation of the vehicle is satisfied, and in response to the satisfaction of the predetermined condition, performs the update for the software subject to update.

In accordance with another embodiment of the present disclosure, a method of operating a signal processing device includes determining whether a software subject to update based on a data received from a server through Over The Air (OTA) method is a predetermined software which is previously set to be able to be updated while a vehicle is in operation; performing an update for the software subject to update, based on the data received from the server, if the software subject to update is the predetermined software; determining whether a predetermined condition for safety at the end of the operation of the vehicle is satisfied, if the software subject to update is not the predetermined software; and performing the update for the software subject to update, in response to the satisfaction of the predetermined condition.

In accordance with another embodiment of the present disclosure, a vehicle control device includes a signal processing device having a transceiver that communicates with a server through Over The Air (OTA) method, a memory that stores data received from the server, and a processor that processes the data received from the server, in which the signal processing device determines whether a software subject to update based on the data received from the server is a predetermined software which is previously set to be able to be updated while a vehicle is in operation, if the software subject to update is the predetermined software, performs an update for the software subject to update, based on the data received from the server, if the software subject to update is not the predetermined software, determines whether a predetermined condition for safety at the end of the operation of the vehicle is satisfied, and in response to the satisfaction of the predetermined condition, performs the update for the software subject to update.

### [Advantageous Effects of Disclosure]

A signal processing device, a vehicle control device having the same, and an operating method thereof according to the present disclosure have the following effects.

According to at least one of the embodiments of the present disclosure, software updates can be performed in consideration of conditions related to safety during operation of the vehicle, thereby minimizing the impact on the driving of the vehicle.

According to at least one embodiment of the present disclosure, the update on the software can be performed in a state where the operation of the vehicle is completely terminated, thereby enabling software updates to be performed more safely.

According to at least one embodiment of the present disclosure, the amount of data downloaded wirelessly for the software updates can be minimized.

According to at least one embodiment of the present disclosure, software can be updated according to an optimized process, while considering the state of the vehicle.

### [Brief Description of Drawings]

FIG. 1 is a diagram illustrating an example of the exterior and interior of a vehicle.
FIGS. 2A to 2C are diagrams illustrating various architectures of a vehicle communication gateway according to an embodiment of the present disclosure.
FIG. 3 is an example of an internal block diagram of a signal processing device of FIG. 2A.
FIG. 4A is a diagram illustrating an example of an arrangement of a vehicle control device inside a vehicle according to an embodiment of the present disclosure.
FIG. 4B is a diagram illustrating another example of an arrangement of a vehicle control device inside a vehicle according to an embodiment of the present disclosure.
FIG. 5 is an example of an internal block diagram of the vehicle control device of FIG. 4B.
FIG. 6 is an example of an internal block diagram of a vehicle communication device.
FIG. 7 is another example of an internal block diagram of a vehicle communication device.
FIGS. 8A to 8D are diagrams illustrating various examples of vehicle communication devices.
FIG. 9A is a diagram illustrating an example of a vehicle communication device according to an embodiment of the present disclosure.
FIG. 9B is a diagram showing another example of a vehicle communication device according to an embodiment of the present disclosure.
FIG. 10 to FIG. 12 are flowcharts showing an operation method of a signal processing device according to various embodiments of the present disclosure.
FIG. 13 is a diagram showing an example of a system according to an embodiment of the present disclosure.
FIG. 14A and FIG. 14B are flowcharts showing an operation method of a signal processing device according to an embodiment of the present disclosure.

### [Mode of Disclosure]

Hereinafter, the present disclosure will be described in detail with reference to the drawings. In the drawings, in order to clearly and concisely describe the present disclosure, parts that are not related to the description are omitted, and the same drawing reference numerals are used for identical or extremely similar parts throughout the specification.

The suffixes "module" and "part" used for components in the following description are given simply for the convenience of writing this specification, and do not in themselves impart any particularly important meaning or role. Therefore, the above "module" and "part" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

In addition, in this specification, terms such as first, second, etc. may be used to describe various elements, but these elements are not limited by these terms. These terms are used only to distinguish one element from another.

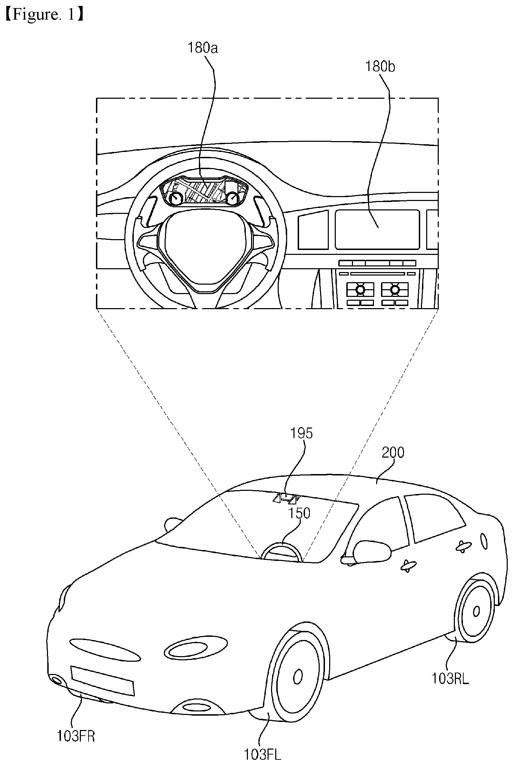

FIG. 1 is a view showing an example of the exterior and interior of a vehicle.

Referring to FIG. 1, a vehicle 200 is operated by a plurality of wheels 103FR, 103FL, 103RL,... rotated by a power source, and a steering wheel 150 for adjusting a moving direction of the vehicle 200.

Meanwhile, the vehicle 200 may be provided with a camera 195 for acquiring an image of the front of the vehicle.

Meanwhile, the vehicle 200 may further provided therein with a plurality of displays 180a and 180b that display images and information.

In FIG. 1, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be referred to as a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

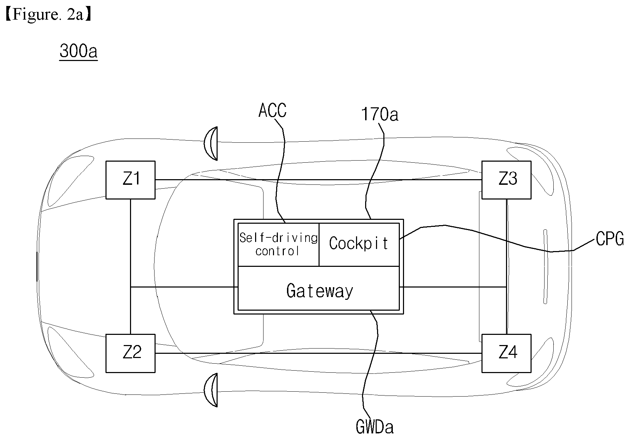

FIGS. 2A to 2C are diagrams illustrating various architectures of a vehicle communication gateway according to an embodiment of the present disclosure.

First, FIG. 2A is a diagram illustrating a first architecture of a vehicle communication gateway according to an embodiment of the present disclosure.

Referring to FIG. 2A, the first architecture 300a may correspond to a zone-based architecture.

Accordingly, in-vehicle sensor devices and processors may be mounted in each of a plurality of zones Z1 to Z4, and a signal processing device 170a including a vehicle communication gateway GWDa may be disposed at the center of the plurality of zones Z1 to Z4.

Meanwhile, the signal processing device 170a may further include a self-driving control module ACC, a cockpit control module CPG, etc., in addition to the vehicle communication gateway GWDa.

The vehicle communication gateway GWDa in the signal processing device 170a may be a High Performance Computing (HPC) gateway.

That is, as an integrated HPC gateway, the signal processing device 170a of FIG. 2A may exchange data with an external communication module (not shown) or processors (not shown) in the plurality of zones Z1 to Z4.

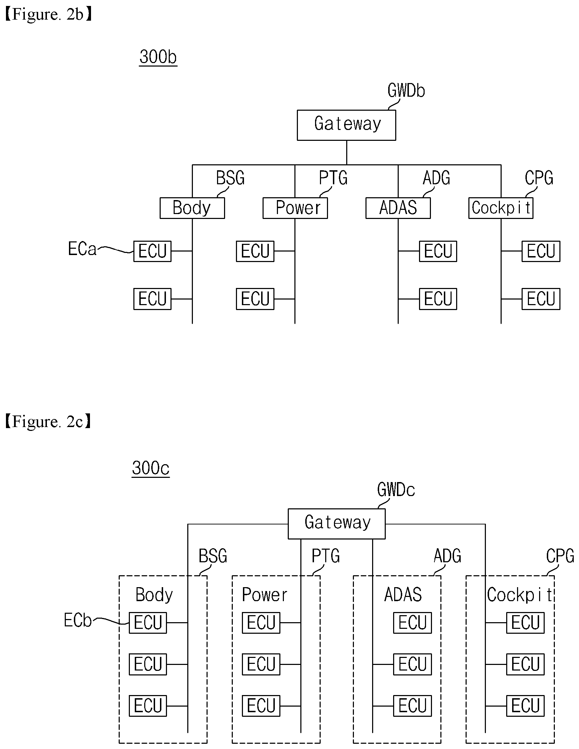

FIG. 2B is a diagram illustrating a second architecture of a vehicle communication gateway according to an embodiment of the present disclosure.

Referring to FIG. 2B, a second architecture 300b may correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU may be electrically connected to the respective modules BSG, PTG, ADG, and CPG.

Meanwhile, the respective processors ECU may be connected to the gateway GWDb while being integrated therein.

Meanwhile, the signal processing device 170 including the gateway GWDb of FIG. 2B may function as a domain integrated signal processing device.

FIG. 2C is a diagram illustrating a third architecture of a vehicle communication gateway according to an embodiment of the present disclosure.

Referring to FIG. 2C, a third architecture 300c may correspond to a distributed architecture.

Accordingly, the body chassis control module (BSG), the power control module (PTG), the ADAS control module (ADG), and the cockpit control module (CPG) are connected in parallel to a gateway GWDc, and particularly, a plurality of processors ECU in the respective control modules may be electrically connected in parallel to the gateway GWDc.

In comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

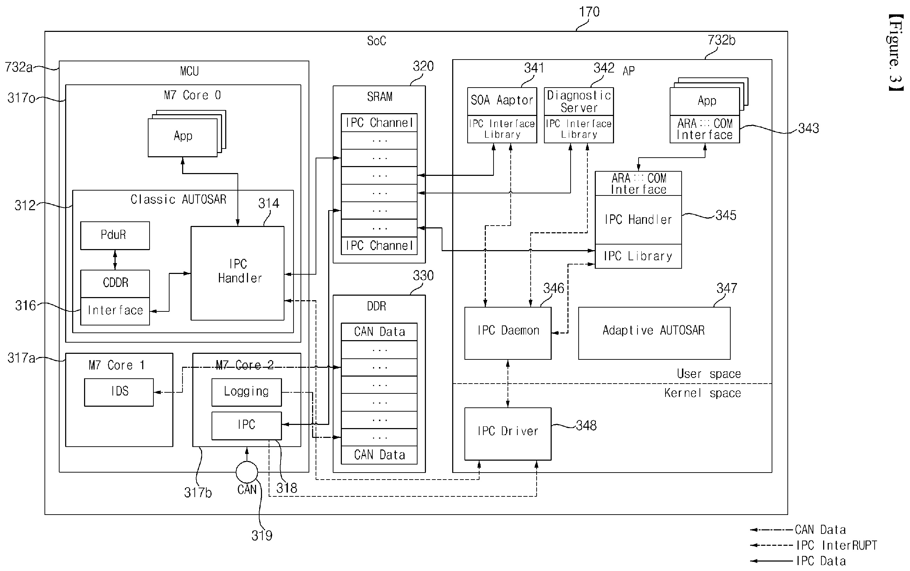

FIG. 3 is an internal block diagram illustrating the signal processing device of FIG. 2A.

Referring to FIG. 3, the signal processing device 170 according to an embodiment of the present disclosure includes: a first processor 732a, based on a first communication scheme, which receives a first message including a sensor signal in a vehicle, and performs signal processing; and a second processor 732b, based a second communication scheme, which receives a second message including a communication message received from an external source, and performs signal processing.

In this case, the second communication scheme may have a faster communication speed or a wider bandwidth than the first communication scheme.

For example, the second communication scheme may be Ethernet communication, and the first communication scheme may be CAN communication. Accordingly, the first message may be a CAN message, and the second message may be an Ethernet message.

Meanwhile, the signal processing device 170 according to an embodiment of the present disclosure further includes: a first memory 320 having an IPC channel; and a second memory 330 storing sensor data including vehicle speed data.

For example, the first memory 320 may be a Static RAM (SRAM), and the second memory 330 may be a DDR memory. Particularly, the second memory 330 may be a Double data rate synchronous dynamic random access memory (DDR SDRAM).

Meanwhile, the signal processing device 170 according to an embodiment of the present disclosure includes a shared memory 508 which operates for transmitting the first message or the second message between the first processor 732a and the second processor 732b.

As described above, by performing inter-processor communication using the shared memory 508 during the communication between the first processor 732a and the second processor 732b, latency may be reduced and high-speed data transmission may be performed during inter-processor communication.

Meanwhile, it is preferable that the shared memory 508 is provided in the first memory 320. Accordingly, latency may be reduced and high-speed data transmission may be performed during inter-processor communication.

Meanwhile, the first processor 732a may include a plurality of processor cores 317o, 317a, and 317b disposed therein.

Meanwhile, the first processor 732a may further include an interface 319 for receiving the CAN message from external vehicle sensors.

For example, a first processor core 317o in the first processor 732a may execute a plurality of applications, or may execute a first AUTomotive Open System Architecture (AUTOSAR) 312.

Particularly, by executing a second AUTOSAR 312, the first processor core 317o may execute an inter-processor communication (IPC) handler 314.

Meanwhile, the IPC handler 314 may exchange data with the first memory 320, or may exchange IPC data with an application executed on the first processor core 317o.

Meanwhile, the IPC handler 314 may exchange an interrupt signal with an IPC driver 348 included in the second processor 732b.

Meanwhile, a second processor core 317a included in the first processor 732a may execute IDS, and may receive CAN data from the second memory 330.

Meanwhile, a third processor core 317b included in the first processor 732a may execute Logging, and may store the CAN data, received through the interface 319, in the second memory 330.

Meanwhile, the third processor core 317b included in the first processor 732a may execute an IPC module 318 to exchange IPC data with the first memory 320.

Meanwhile, the third processor core 317b included in the first processor 732a may transmit an interrupt signal to the IPC driver 348 in the second processor 732b.

The first memory 320 may exchange the IPC data with the IPC handler 314 or the IPC module 318.

Meanwhile, the second processor 732b may execute an application 343, the IPC handler 345, an IPC daemon 346, the IPC driver 348, and the like.

Meanwhile, the second processor 732b may further execute a service oriented architecture (SOA) adapter 341, a diagnosis server 342, and the second AUTOSAR 347.

The second AUTOSAR 347 may be an adaptive AUTOSAR, and the first AUTOSAR 312 may be a classic AUTOSAR.

The IPC daemon 346 may exchange an interrupt signal with the SOA adapter 341, the diagnosis server 342, the IPC handler 345, the IPC driver 348, and the like.

Meanwhile, the first memory 320 may exchange IPC data with the SOA adapter 341, the diagnosis server 342, the IPC handler 345, and the like.

Meanwhile, the IPC data described with reference to FIG. 3 may be the CAN message or Ethernet message.

Meanwhile, the IPC handler 345 may function as a service provider that provides data such as diagnosis, firmware upgrade, and system information, based on the second AUTOSAR 347.

Meanwhile, although not shown in FIG. 3, the first processor 732a may execute a message router (not shown), and the message router may convert a frame of the first message, such as the CAN message, into a frame format of the second message, such as the Ethernet message, and may transmit the converted message to the second processor 732b.

Meanwhile, although not shown in FIG. 3, the first processor 732a may further execute a CAN driver (not shown) and a CAN interface (not shown).

For example, the CAN interface (not shown) may be executed by a total of 16 channels, with eight channels of each of a fourth processor core (not shown) and a fifth processor core (not shown) in the first processor 732a.

In this case, a first CAN interface (not shown) executed on the fourth processor core (not shown) may correspond to a first queue (PTb) during inter-processor communication, and a second CAN interface (not shown) executed on the fifth processor core (not shown) may correspond to a second queue (PTb) having a higher priority than the first queue (PTb) during inter-processor communication.

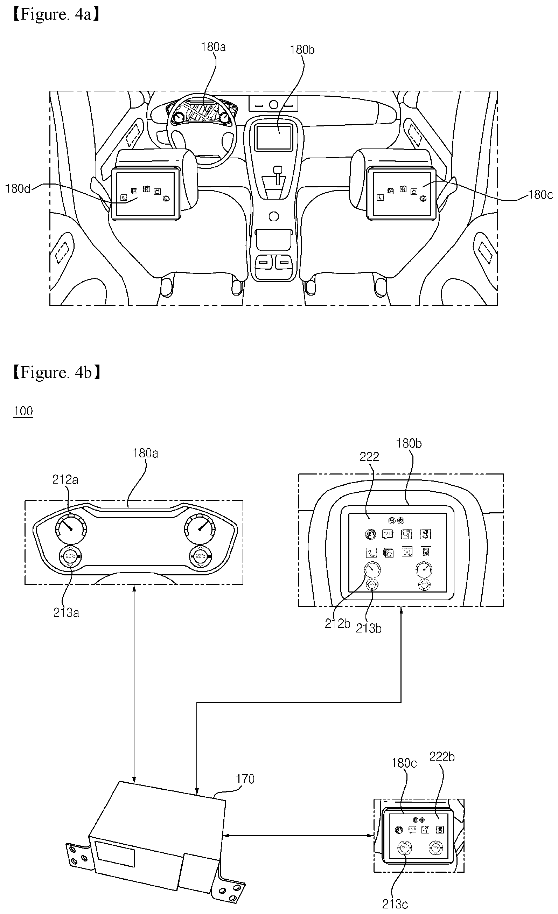

FIG. 4A is a diagram illustrating an example of an arrangement of a vehicle control device inside a vehicle according to an embodiment of the present disclosure.

Referring to FIG. 4A, a cluster display 180a, an audio video navigation (AVN) display 180b, rear seat entertainment displays 180c and 180d, and a rear-view mirror display (not shown) may be mounted inside the vehicle.

FIG. 4B is a diagram illustrating another example of an arrangement of a vehicle control device inside a vehicle according to an embodiment of the present disclosure.

A vehicle control device 100 according to the embodiment of the present disclosure may include a plurality of displays 180a and 180b, and a signal processing device 170 that performs signal processing in order to display images and information on the plurality of displays 180a and 180b.

Among the plurality of displays 180a and 180b, a first display 180a may be a cluster display 180a for displaying a driving state and operation information, and a second display 180b may be an audio video navigation (AVN) display 180b for displaying vehicle driving information, a navigation map, and various entertainment information or image.

The signal processing device 170 may have a processor 175 provided therein, and may execute first to third virtual machines (not shown) on a hypervisor 505 in the processor 175.

A second virtual machine (not shown) may operate for the first display 180a, and the third virtual machine (not shown) may operate for the second display 180b.

Meanwhile, the first virtual machine (not shown) in the processor 175 may control to set a shared memory 508 based on the hypervisor 505 for transmission of the same data to the second virtual machine (not shown) and the third virtual machine (not shown). Accordingly, the same information or the same image may be displayed synchronously on the first display 180a and the second display 180b in the vehicle.

Meanwhile, the first virtual machine (not shown) in the processor 175 shares at least a portion of data with the second virtual machine (not shown) and the third virtual machine (not shown) for data sharing processing. Accordingly, data can be shared and processed in the plurality of virtual machines for the plurality of displays in the vehicle.

Meanwhile, the first virtual machine (not shown) in the processor 175 may receive and process wheel speed sensor data of the vehicle, and may transmit the processed wheel speed sensor data to at least one of the second virtual machine (not shown) or the third virtual machine (not shown). Accordingly, at least one virtual machine may share the wheel speed sensor data of the vehicle.

Meanwhile, the vehicle control device 100 according to the embodiment of the present disclosure may further include a rear seat entertainment (RSE) display 180c that displays driving state information, simple navigation information, and various entertainment information or image.

The signal processing device 170 may further execute a fourth virtual machine (not shown), on the hypervisor 505 in the processor 175, on the hypervisor 505 in the processor 175, in addition to the first to third virtual machines (not shown), to control the RSE display 180c.

Accordingly, it is possible to control various displays 180a to 180c by using a single signal processing device 170.

Meanwhile, some of the plurality of displays 180a to 180c may operate based on a Linux Operating System (OS), and others may operate based on a Web Operating System (OS).

The signal processing device 170 according to the embodiment of the present disclosure may control to synchronously display the same information or the same images on the displays 180a to 180c operating under different operating systems (OS).

Meanwhile, FIG. 4B illustrates that a first display 180a displays a vehicle speed indicator 212a and an in-vehicle temperature indicator 213a, a second display 180b displays a home screen 222 including a plurality of applications, a vehicle speed indicator 212b, and an in-vehicle temperature indicator 213b, and a third display 180c displays a second home screen 222b including a plurality of applications and an in-vehicle temperature indicator 213c.

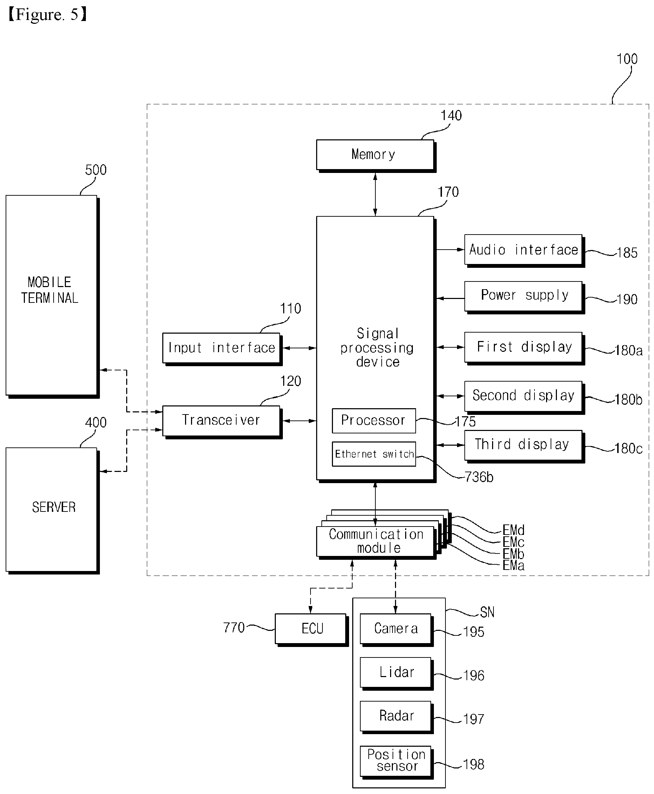

FIG. 5 is an example of an internal block diagram of the vehicle control device of FIG. 4B.

Referring to FIG. 5, the vehicle control device 100 according to the embodiment of the present disclosure may include an input interface 110, a transceiver 120 for communication with an external device, a plurality of communication modules EMa to EMd for internal communication, a memory 140, a signal processing device 170, a plurality of displays 180a to 180c, an audio interface 185, and a power supply 190.

The plurality of communication modules EMa to EMd may be disposed in a plurality of zones Z1 to Z4, respectively, in FIG. 2A.

Meanwhile, the signal processing device 170 may be provided therein with an Ethernet switch 736b for data communication with the respective communication modules EM1 to EM4.

The respective communication modules EM1 to EM4 may perform data communication with a plurality of sensor devices SN or an ECU 770.

Meanwhile, each of the plurality of sensor devices SN may include a camera 195, a lidar 196, a radar 197, or a position sensor 198.

The input interface 110 may include a physical button or pad for button input or touch input.

Meanwhile, the input interface 110 may include a microphone (not shown) for user voice input.

The transceiver 120 may wirelessly exchange data with a mobile terminal 500 or a server 400.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 500 or the server 400. To this end, the transceiver 120 may include a mobile communication module (not shown).

The plurality of communication modules EM1 to EM4 may receive sensor data from an electronic control unit (ECU) 770 or a sensor device SN, and may transmit the received sensor data to the signal processing device 170.

Here, the sensor data may include at least one of vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, in-vehicle temperature data, or in-vehicle humidity data.

The sensor data may be acquired from a heading sensor, a yaw sensor, a gyro sensor, a position module, a vehicle forward/backward movement sensor, a wheel sensor, a vehicle speed sensor, a car body inclination sensor, a battery sensor, a fuel sensor, a tire sensor, a steering-wheel-rotation-based steering sensor, an in-vehicle temperature sensor, or an in-vehicle humidity sensor.

Meanwhile, the position module may include a GPS module for receiving GPS information or a position sensor 198.

Meanwhile, at least one of the plurality of communication modules EM1 to EM4 may transmit position information data sensed by the GPS module or the position sensor 198 to the signal processing device 170.

Meanwhile, at least one of the plurality of communication modules EM1 to EM4 may receive front-of-vehicle image data, side-of-vehicle image data, rear-of-vehicle image data, and obstacle-around-vehicle distance information from the camera 195, the lidar 196, or the radar 197, and may transmit the received information to the signal processing device 170.

The memory 140 may store various data necessary for overall operation of the vehicle control device 100, such as programs for processing or control of the signal processing device 170.

For example, the memory 140 may store data, which is related to the hypervisor and first to third virtual machines, for execution within the processor 175.

The audio interface 185 may convert an electrical signal from the signal processing device 170 into an audio signal, and may output the audio signal. To this end, the audio interface 185 may include a speaker.

The power supply 190 may supply power necessary to operate components under control of the signal processing device 170. In particular, the power supply 190 may receive power from a battery in the vehicle.

The signal processing device 170 may control overall operation of each unit in the vehicle control device 100.

For example, the signal processing device 170 may include a processor 175 configured to perform signal processing for the vehicle displays 180a and 180b.

The processor 175 may execute the first to third virtual machines (not shown), on the hypervisor 505 (not shown) in the processor 175.

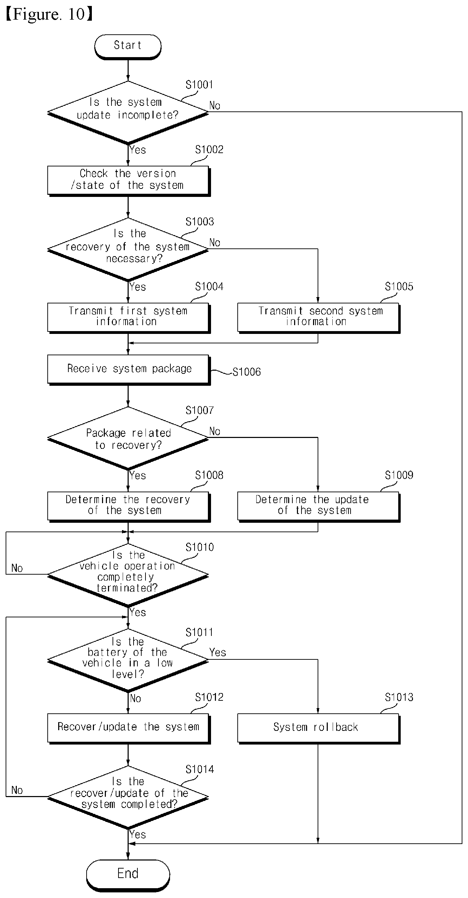

Among the first to third virtual machines (not shown) (see FIG. 10), the first virtual machine (not shown) may be referred to as a server virtual machine, and the second and third virtual machines (not shown) may be referred to as a guest virtual machine.

For example, the first virtual machine (not shown) in the processor 175 may receive sensor data from the plurality of sensor devices, such as vehicle sensor data, position information data, camera image data, audio data, or touch input data, and may process and output the received sensor data.

As described above, 1:N data sharing can be achieved by performing most of the data processing in the first virtual machine (not shown).

In another example, the first virtual machine (not shown) may directly receive and process CAN data, Ethernet data, audio data, radio data, USB data, and wireless communication data for the second and third virtual machines (not shown).

Further, the first virtual machine (not shown) may transmit the processed data to the second and third virtual machines (not shown).

Accordingly, only the first virtual machine (not shown), among the first to third virtual machines (not shown), may receive sensor data from the plurality of sensor devices, communication data, or external input data, and may perform signal processing, so that signal processing burden on other virtual machines may be reduced, and 1:N data communication may be possible, thereby achieving a synchronization during data sharing.

Meanwhile, the first virtual machine (not shown) may control the second virtual machine (not shown) and the third virtual machine (not shown) to share the same data, by writing data in the shared memory 508.

For example, the first virtual machine (not shown) may control the second virtual machine (not shown) and the third virtual machine (not shown) to share the same data, by writing vehicle sensor data, the position information data, the camera image data, or the touch input data in the shared memory 508. Accordingly, 1:N data sharing can be achieved.

Eventually, 1:N data sharing can be achieved by performing most of the data processing in the first virtual machine (not shown).

Meanwhile, the first virtual machine (not shown) in the processor 175 may control to set the shared memory 508 based on the hypervisor 505, in order to transmit the same data to the second virtual machine (not shown) and the third virtual machine (not shown).

Meanwhile, the signal processing device 170 may process various signals, such as an audio signal, an image signal, and a data signal. To this end, the signal processing device 170 may be implemented in the form of a system on chip (SOC).

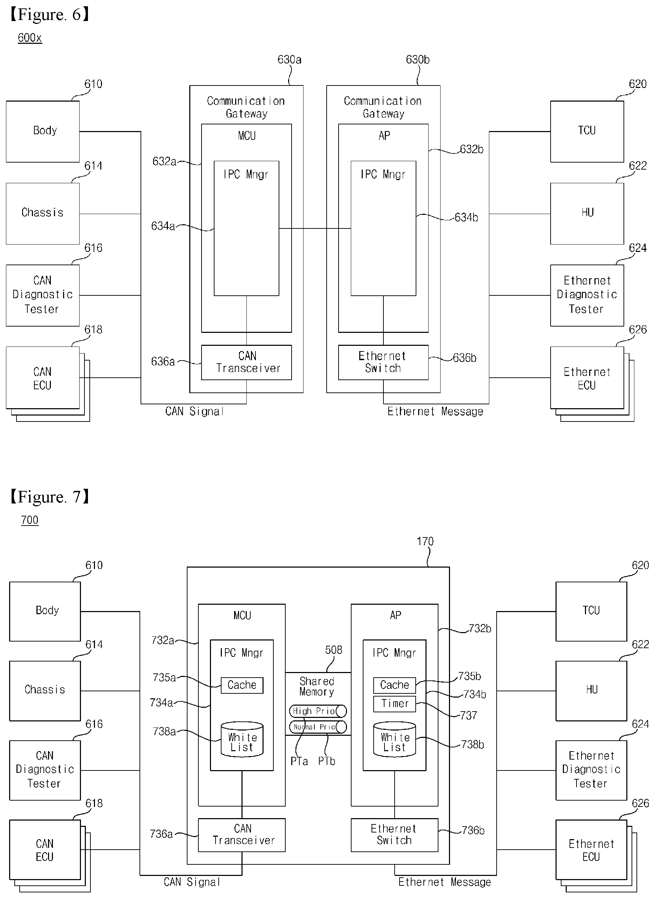

Meanwhile, the signal processing device 170 in the display apparatus 100 of FIG. 5 may be the same as the signal processing device 170 of a vehicle communication device 700 of FIG. 7 and the like.

FIG. 6 is an example of an internal block diagram of a vehicle communication device.

Referring to FIG. 6, a vehicle communication device 600x related to the present disclosure may include a first communication gateway 630a and a second communication gateway 630b.

The first communication gateway 630a may include a body module 610, a chassis module 614, a CAN communication diagnostic device 616, a CAN transceiver 636a for exchanging a CAN signal by CAN communication with at least one CAN communication ECU 618 and the like, and a first processor 632a for performing signal processing on the CAN signal received from the CAN transceiver 636a.

Meanwhile, the first processor 632a may include an IPC manager 634a for inter-processor communication with a second processor 632b in the second communication gateway 630b.

The second communication gateway 630b may include a telematics control module 620, a head module 622, an Ethernet communication diagnostic device 624, an Ethernet switch 636b for exchanging an Ethernet message by Ethernet communication with at least one Ethernet communication ECU 626, and a second processor 632b for performing signal processing on the Ethernet message received from the Ethernet switch 636b.

Meanwhile, the second processor 632b may include an IPC manager 634b for inter-processor communication with the first processor 632a in the first communication gateway 630a.

Meanwhile, the IPC manager 634a in the first processor 632a and the IPC manager 643b in the second processor 632b may perform inter-processor communication, based on the Ethernet communication.

This approach is advantageous for high-speed transmission of large amounts of data using Ethernet-based high bandwidth, but it has the disadvantage of causing latency in the communication between protocol stack and physical layer (PHY).

Accordingly, the present disclosure provides a method of reducing latency and performing high-speed data transmission during inter-processor communication. This is described with reference to FIG. 7 and below.

FIG. 7 is another example of an internal block diagram of a vehicle communication device.

Referring to FIG. 7, the vehicle communication device 700 according to an embodiment of the present disclosure may include: a first processor 732a which, based on a first communication scheme with a first communication gateway 730a and a second communication gateway 730b, receives a first message including an in-vehicle sensor signal, and performs signal processing; a second processor 732b which, based on a second communication scheme, receives a second message including a communication message received from an external source, and performs signal processing of the received second message; and a shared memory 508 which operates to transmit the first message or the second message between the first processor 732a and the second processor 732b.

In comparison with the communication device 600x of FIG. 6, by using the shared memory 508 for inter-processor communication (IPC) between the first processor 732a and the second processor 732b, it is possible to reduce latency and to perform high-speed data transmission during the inter-processor communication.

In addition, in comparison with the communication device 600x of FIG. 6, by implementing the first processor 732a, the second processor 732b, and the shared memory 508 as one signal processing device 170 which is a single chip, it is possible to reduce latency and to perform high-speed data transmission during the inter-processor communication.

Meanwhile, it is preferable that the second communication scheme has a wider bandwidth and a faster transmission speed than the first communication scheme.

For example, the second communication scheme may be Ethernet communication, and the first communication scheme may be CAN communication. Accordingly, the first message may be a CAN message or a CAN signal, and the second message may be an Ethernet message.

Meanwhile, the signal processing device 170 and the vehicle communication device 700 including the same according to an embodiment of the present disclosure may further include: a transceiver 736a which, based on the first communication scheme, receives a first message including an in-vehicle sensor signal and transmits the first message to the first processor 732a; and a switch 736b which, based on the second communication scheme, receives a second message including a communication message received from an external source and transmits the second message to the second processor 732b. Accordingly, the first and second messages may be transmitted stably to the first processor 732a and the second processor 732b.

The first processor 732a or the transceiver 736a may exchange a CAN signal by CAN communication with the body module 610, the chassis module 614, the CAN diagnostic device 616, at least one CAN communication ECU 618, and the like.

Meanwhile, the first processor 732a may include a first manager 734a for inter-processor communication (IPC) with the second processor 732b. The first manager 734a may be referred to as an IPC manager.

Meanwhile, the first manager 734a may include a first cache 735a.

Meanwhile, the second processor 732b or the switch 736b may exchange an Ethernet message by Ethernet communication with the telematics control module 620, the head module 622, the Ethernet diagnostic device 624, at least one Ethernet communication ECU 626, and the like. The switch 736b may be referred to as an Ethernet switch.

Meanwhile, the second processor 732b may include a second manager 734b for inter-processor communication (IPC) with the first processor 732a. The second manager 734a may be referred to as an IPC manager.

Meanwhile, the second manager 734b may include the second manager 734b including a second cache 735b and a timer 737.

Meanwhile, the second processor 723b may receive a periodic subscription request for the first message from the Ethernet processor or Ethernet communication ECU 626.

Accordingly, the second processor 732b may transmit the periodic subscription request for the first message to the first processor 732a.

Particularly, the second processor 732b may transmit the subscription request through the inter-processor communication (IPC). Accordingly, the inter-processor communication may be performed.

Meanwhile, the first processor 732a may periodically receive CAN communication data from the at least one CAN communication ECU 618, and the like.

For example, the first processor 732a periodically receives the first message, which is predefined in a CAN database (DB), from the at least one CAN communication ECU 618, and the like.

For example, the periodic first message, which is sensor data, may include vehicle speed information, position information, or the like.

In another example, the periodic first message may include at least one of vehicle direction information, vehicle location information (GPS information), vehicle angle information, vehicle acceleration information, vehicle inclination information, forward/backward movement information, battery information, fuel information, tire information, vehicle lamp information, in-vehicle temperature information, or in-vehicle humidity information.

Meanwhile, the first processor 732a may select a first message, which is requested for subscription, from among the periodically received CAN communication data or first messages, and may transmit the first message requested for subscription to the second processor 732b.

Meanwhile, the first processor 732a may separately process a first message, which is not requested for subscription, from among the periodically received CAN data or first messages, according to an internal operation, and may not transmit the message to the second processor 732b.

Specifically, when receiving the first message requested for subscription, the first processor 732a may store the first message in the first cache 735a or manage the first message. When receiving the first message, the first processor 732a may compare the first message with a value stored in the first cache 735a, and if a difference therebetween is greater than or equal to a certain value, the first processor 732a may transmit the first message to the second processor 732b through the inter-processor communication.

Meanwhile, when receiving the first message requested for subscription, the first processor 732a may store the first message in the first cache 735a or may manage the first message. When receiving the first message, the first processor 732a may compare the first message with a value stored in the first cache 735a, and if a difference therebetween is greater than or equal to a certain value, the first processor 732a may transmit the first message to the second processor 732b through the inter-processor communication by using the shared memory 508.

For example, when receiving the first message, the first processor 732a may compare the message with a value stored in the first cache 735a, and if both values are not the same, the first processor 732a may transmit the first message to the second processor 732b through the inter-processor communication, by using the shared memory 508.

In another example, when receiving the first message, the first processor 732a may compare the message with the value stored in the first cache 735a, and if both values are the same, the first processor 732a may not transmit the first message to the second processor 732b.

Accordingly, by minimizing cache occupancy or buffer occupancy of the same data, it is possible to reduce latency and to perform high-speed data transmission during inter-processor communication.

Meanwhile, the second processor 732b may store the first message in the second cache 735b when first receiving the first message, and may update the second cache 735b when subsequently receiving the first message. Accordingly, it is possible to reduce latency and to perform high-speed data transmission during inter-processor communication.

Meanwhile, in response to receiving the first message, the second processor 732b may generate a thread of the timer 737, and transmit a value of the second cache 735b to the Ethernet processor or the Ethernet ECU 626 at each expiration of the thread. Accordingly, it is possible to reduce latency and to perform high-speed data transmission during inter-processor communication.

Meanwhile, during a period in which the inter-processor communication is not performed such that the first message is not received, the second processor 732b may transmit a value of the second cache 735b to the Ethernet processor or the Ethernet ECU 626.

That is, if a value of the subscribed first message is not change during a period, the cache value stored in the second processor 732b may be transmitted to the Ethernet processor 626 without the inter-processor communication.

Accordingly, it is possible to minimize the usage of the IPC buffer in the shared memory 508 which operates in FIFO mode. In addition, by maintaining the usage of the IPC buffer to a minimum, data such as the first message, or the second message may be transmitted rapidly through the inter-processor communication.

Meanwhile, during a period in which the inter-processor communication is performed such that the first message is received, the second processor 732b may transmit the updated value in the second cache 735b to the Ethernet processor or the Ethernet ECU 626. Accordingly, it is possible to reduce latency and to perform high-speed data transmission during inter-processor communication.

Meanwhile, during the inter-processor communication, the shared memory 508 may transmit data to between the first processor 732a and the second processor 732b through a first queue PTb and a second queue PTa having a higher priority than the first queue PTb.

Particularly, even when the number of events for the inter-processor communication increases, the shared memory 508 may transmit only the data, corresponding to events allocated for the second queue PTa, through the second queue PTa. Accordingly, real-time transmission of a high priority event may be ensured during the inter-processor communication.

For example, the first queue Tb may be a normal priority queue, and the second queue PTa may be a high priority queue.

Specifically, the shared memory 508 may transmit most of the data through the first queue PTb during the inter-processor communication.

However, the share memory 508 may transmit only time sensitive-critical data without delay through the second queue PTa which has a higher priority than the first queue PTb. For example, the time sensitive-critical data may be speed data, position information data, or the like.

That is, the shared memory 508 may transmit the speed data or position information data to between the first processor 732a and the second processor 732b, through the second queue PTa.

Accordingly, real-time transmission of the speed data or the position information data having a high priority may be ensured during the inter-processor communication.

Meanwhile, the first processor 732a or the second processor 732b may manage a list of applications capable of using the second queue PTa.

For example, the second processor 732b may include an application for displaying speed information, as an application capable of using the second queue PTa, into a second list 738b and may manage the application.

Meanwhile, for real-time data transmission using the second queue PTa, it is preferable to control the scenarios or applications to operate to a minimum so that they do not overlap.

As described above, by transmitting the time sensitive-critical data in real time using the second queue PTa, real-time transmission of a high priority event may be ensured during the inter-processor communication.

Meanwhile, during the inter-processor communication, the shared memory 508 may reduce latency and may perform high-speed data transmission by assigning at least two queues.

In the drawing, it is illustrated that the fist manager 734a in the first processor 732a manages a first list 738a which is a whitelist, and the second manager 734b in the second processor 732b manages a second list 738b which is a whitelist. Accordingly, it is possible to ensure the real-time transmission of a high-priority event during the inter-processor communication.

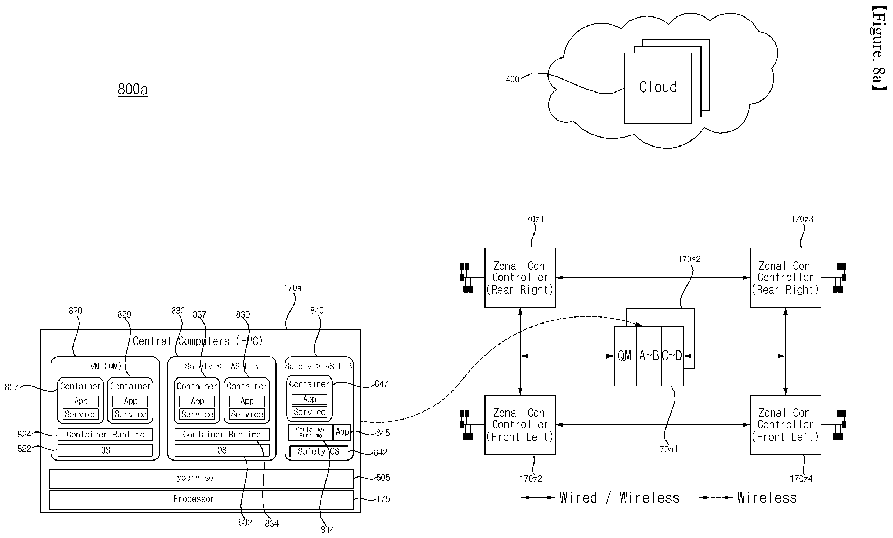

FIGS. 8A to 8D are diagrams illustrating various examples of vehicle communication devices.

FIG. 8A illustrates an example of a vehicle communication device according to an embodiment of the present disclosure.

Referring to FIG. 8A, a vehicle communication device 800a according to an embodiment of the present disclosure includes a signal processing device 170a1, 170a2 and a plurality of area signal processing devices 170Z1 to 170Z4.

Meanwhile, in FIG. 8A, two signal processing devices 170a1, 170a2 are illustrated, but this is illustrated for backup purpose, and a single device may also be used.

Meanwhile, the signal processing device 170a1, 170a2 may also be named as a High Performance Computing (HPC) signal processing device.

The plurality of area signal processing devices 170Z1 to 170Z4 may be arranged in each area Z1 to Z4, and may transmit sensor data to the signal processing device 170a1, 170a2.

The signal processing device 170a1, 170a2 receives data from the plurality of area signal processing devices 170Z1 to 170Z4 or the transceiver 120 by wire.

In the drawing, it is illustrated that data is exchanged between the signal processing device 170a1, 170a2 and the plurality of area signal processing devices 170Z1 to 170Z4 based on wired communication, and the signal processing device 170a1, 170a2 and the server 400 exchange data based on wireless communication. However, data may be exchanged between the transceiver 120 and the server 400 based on wireless communication, and the signal processing device 170a1, 170a2 and the transceiver 120 may exchange data based on wired communication.

Meanwhile, the data received by the signal processing device 170a1, 170a2 may include camera data or sensor data.

For example, sensor data inside a vehicle may include at least one of vehicle wheel speed data, vehicle direction data, vehicle location data (GPS data), vehicle angle data, vehicle speed data, vehicle acceleration data, vehicle inclination data, vehicle forward/backward movement data, battery data, fuel data, tire data, vehicle lamp data, in-vehicle temperature data, in-vehicle humidity data, vehicle external radar data, or vehicle external lidar data.

Meanwhile, camera data may include vehicle external camera data, in-vehicle camera data.

Meanwhile, the signal processing device 170a1, 170a2 may execute a plurality of virtual machines 820, 830, 840 on a safety basis.

In the drawing, it is illustrated that the processor 175 in the signal processing device 170a executes the hypervisor 505, and executes first to third virtual machines 820 to 840 on the hypervisor 505 according to automotive safety integrity level (ASIL).

A first virtual machine 820 may be a virtual machine corresponding to Quality Management (QM) which is the lowest safety level in the automotive safety integrity level (ASIL) and is a non-mandatory grade.

The first virtual machine 820 may execute an operating system 822, a container runtime 824 on the operating system 822, and a container 827, 829 on the container runtime 824.

A second virtual machine 830 may be a virtual machine corresponding to ASIL A or ASIL B, where the sum of severity, exposure, and controllability is 7 or 8 in the automotive safety integrity level (ASIL).

The second virtual machine 830 may execute an operating system 832, a container runtime 834 on the operating system 832, and a container 837, 839 on the container runtime 834.

A third virtual machine 840 may be a virtual machine corresponding to ASIL C or ASIL D, where the sum of severity, exposure, and controllability is 9 or 10 in the automotive safety integrity level (ASIL).

Meanwhile, ASIL D may correspond to a grade requiring the highest safety level.

The third virtual machine 840 can execute a safety operating system 842, and an application 845 on the operating system 842.

Meanwhile, the third virtual machine 840 may also execute a safety operating system 842, a container runtime 844 on the safety operating system 842, and a container 847 on the container runtime 844.

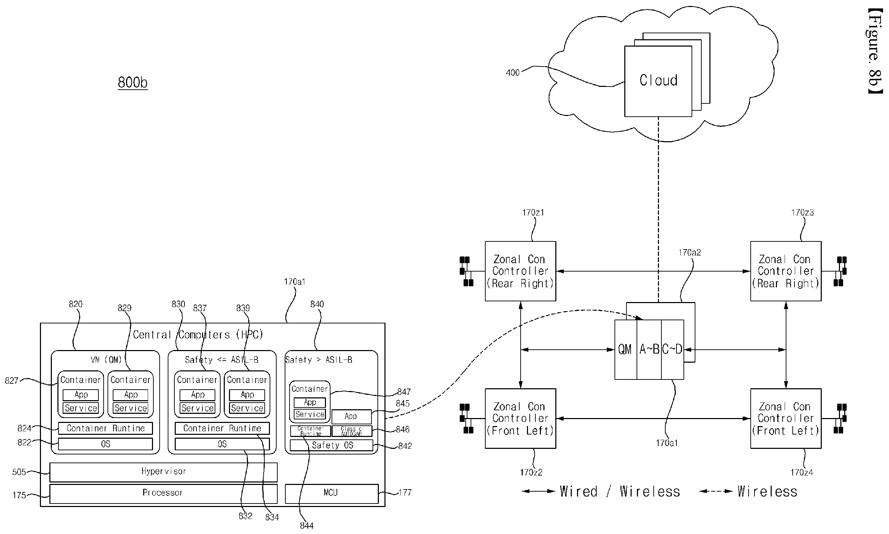

Meanwhile, unlike the drawing, the third virtual machine 840 can also be executed through a separate core, not through the processor 175. This will be described later with reference to FIG. 8B.

Meanwhile, the processor 175 executing the first to third virtual machines 820 to 840 may correspond to the second processor 732b of FIG. 7.

FIG. 8B illustrates another example of a vehicle communication device according to an embodiment of the present disclosure.

Referring to FIG. 8B, the vehicle communication device 800b according to the embodiment of the present disclosure includes a signal processing device 170a1, 170a2 and a plurality of area signal processing devices 170Z1 to 170Z4.

The vehicle communication device 800b of FIG. 8B is similar to the vehicle communication device 800a of FIG. 8A, but the signal processing device 170a1 has some differences from the signal processing device 170a1 of FIG. 8A.

Focusing on the differences, the signal processing device 170a1 may be equipped with a processor 175 and a second processor 177.

The processor 175 in the signal processing device 170a1 executes the hypervisor 505, and executes the first and second virtual machines 820~830 on the hypervisor 505, according to the automotive safety integrity level (Automotive SIL; ASIL).

The first virtual machine 820 may execute an operating system 822, a container runtime 824 on the operating system 822, and a container 827, 829 on the container runtime 824.

The second virtual machine 830 may execute an operating system 832, a container runtime 834 on the operating system 832, and a container 837, 839 on the container runtime 834.

Meanwhile, the second processor 177 in the signal processing device 170a1 may execute a third virtual machine 840.

The third virtual machine 840 may execute a safety operating system 842, an AUTOSAR 845 on the operating system 842, and an application 845 on the AUTOSAR 845. That is, unlike FIG. 8A, it may further execute an AUTOSAR 846 on the operating system 842.

Meanwhile, similar to FIG. 8A, the third virtual machine 840 may also execute a safety operating system 842, a container runtime 844 on the safety operating system 842, and a container 847 on the container runtime 844.

Meanwhile, the third virtual machine 840 requiring a high safety level is preferably executed on a second processor 177, which is a different core or a different processor, unlike the first and second virtual machines 820 to 830.

Meanwhile, the processor 175 executing the first and second virtual machines 820~830 may correspond to the second processor 732b of FIG. 7, and the second processor 177 executing the third virtual machine 840 may correspond to the first processor 732a of FIG. 7.

Meanwhile, the signal processing devices 170a1, 170a2 of FIG. 8A and FIG. 8B may operate as a backup second signal processing device 170a2, in the event of a malfunction of the first signal processing device 170a.

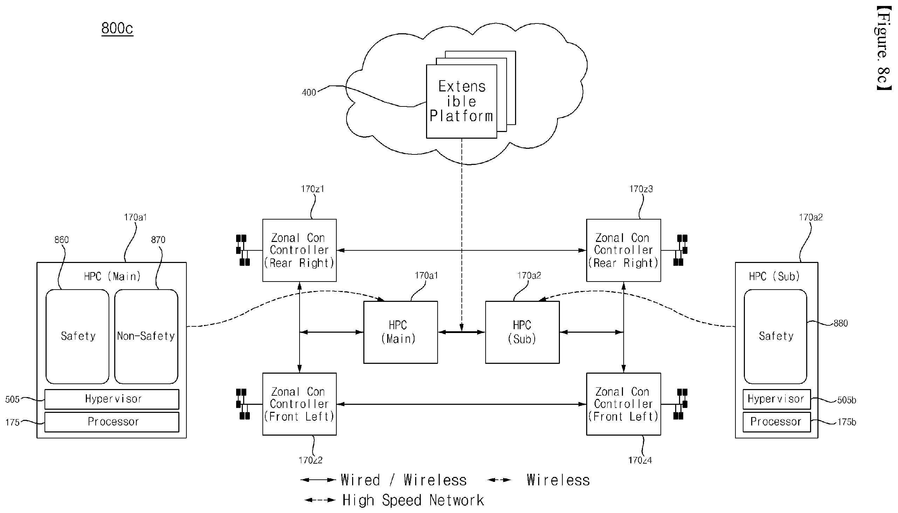

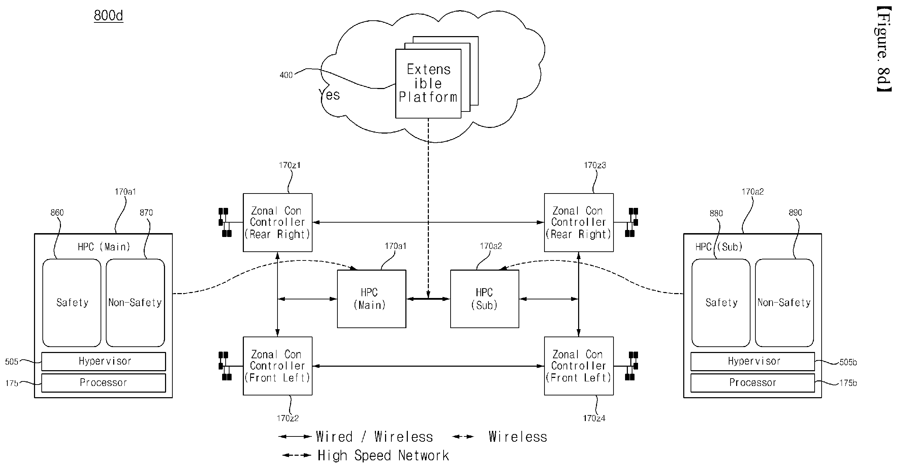

Alternatively, it is also possible for the signal processing devices 170a1, 170a2 to operate simultaneously, while the first signal processing device 170a operates as a main device and the second signal processing device 170a2 operates as a sub device. This will be described with reference to FIG. 8C and FIG. 8D.

FIG. 8C illustrates another example of a vehicle communication device according to an embodiment of the present disclosure.

Referring to FIG. 8C, a vehicle communication device 800c according to an embodiment of the present disclosure includes a signal processing device 170a1, 170a2 and a plurality of area signal processing devices 170Z1 to 170Z4.

Meanwhile, in the drawing, two signal processing devices 170a1, 170a2 are illustrated, but this is illustrate for backup purposes, and a single signal processing device may also be used.

Meanwhile, the signal processing device 170a1, 170a2 may also be named as a High Performance Computing (HPC) signal processing device.

The plurality of area signal processing devices 170Z1 to 170Z4 are arranged in each area Z1 to Z4 and may transmit sensor data to the signal processing device 170a1, 170a2.

The signal processing device 170a1, 170a2 receives data from a plurality of area signal processing devices 170Z1 to 170Z4 or the transceiver 120 by wire.

In the drawing, it illustrated that data is exchanged between the signal processing device 170a1, 170a2 and the plurality of area signal processing devices 170Z1 to 170Z4 based on wired communication, and the signal processing device 170a1, 170a2 and the server 400 exchange data based on wireless communication. However, data may be exchanged between the transceiver 120 and the server 400 based on wireless communication, and the signal processing device 170a1, 170a2 and the transceiver 120 may exchange data based on wired communication.

Meanwhile, the data received by the signal processing device 170a1, 170a2 may include camera data or sensor data.

Meanwhile, among the signal processing devices 170a1, 170a2, the processor 175 in the first signal processing device 170a1 may execute a hypervisor 505 and execute a safety virtual machine 860 and a non-safety virtual machine 870 on the hypervisor 505, respectively.

Meanwhile, among the signal processing devices 170a1, 170a2, the processor 17b5 in the second signal processing device 170a2 may execute a hypervisor 505b and execute only a safety virtual machine 880 on the hypervisor 505.

According to such a method, the processing for safety is separated for the first signal processing device 170a1 and the second signal processing device 170a2, thereby improving stability and processing speed.

Meanwhile, high-speed network communication may be performed between the first signal processing device 170a1 and the second signal processing device 170a2.

FIG. 8D illustrates another example of a vehicle communication device according to an embodiment of the present disclosure.

Referring to FIG. 8D, a vehicle communication device 800d according to an embodiment of the present disclosure includes a signal processing device 170a1, 170a2 and a plurality of area signal processing devices 170Z1 to 170Z4.

The vehicle communication device 800d of FIG. 8D is similar to the vehicle communication device 800c of FIG. 8C, but the second signal processing device 170a2 has some differences from the second signal processing device 170a2 of FIG. 8C.

The processor 17b5 in the second signal processing device 170a2 of FIG. 8D executes a hypervisor 505b, and may execute a safety virtual machine 880 and a non-safety virtual machine 890 on the hypervisor 505.

That is, unlike FIG. 8C, there is a difference in that the processor 17b5 in the second signal processing device 170a2 further executes a non-safety virtual machine 890.

According to such a method, the processing for safety and non-safety is separated for the first signal processing device 170a1 and the second signal processing device 170a2, thereby improving stability and processing speed.

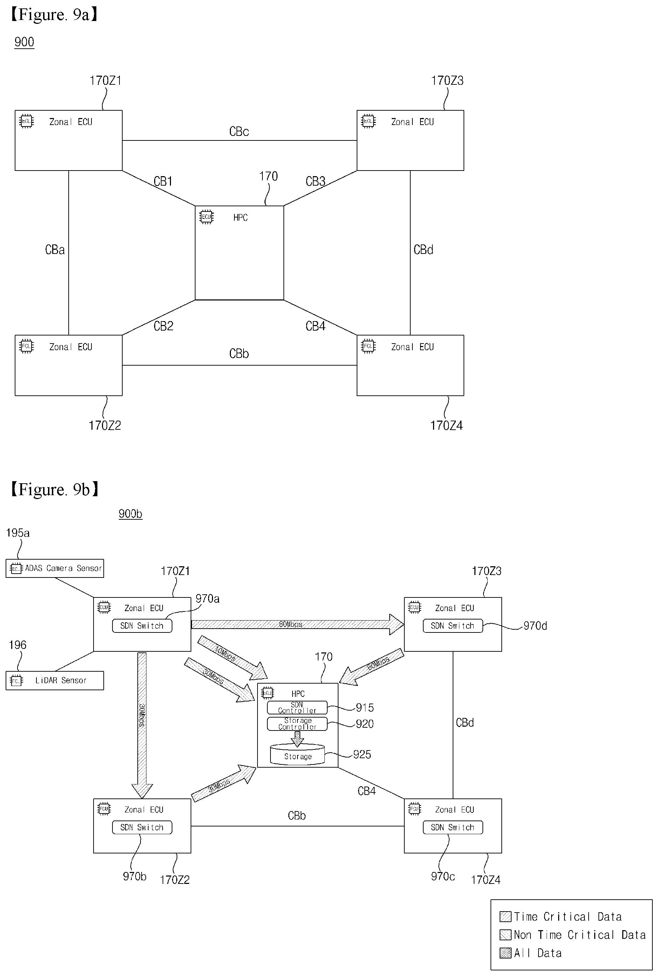

FIG. 9A is a drawing showing an example of a vehicle communication device according to an embodiment of the present disclosure.

Referring to FIG. 9A, the vehicle communication device 900 according to an embodiment of the present disclosure includes a plurality of area signal processing devices 170Z1 to 170Z4 and a signal processing device 170.

The signal processing device 170 at this time may be referred to as a High Performance Computing (HPC) signal processing device or a central signal processing device.

The plurality of area signal processing devices 170Z1 to 170Z4 and the signal processing device 170 are connected by a wired cable CB1 to CB4.

Meanwhile, the plurality of area signal processing devices 170Z1 to 170Z4 are connected by wired cables CBa to CBd.

Meanwhile, there is provided a storage device (925 of FIG. 9B) in the signal processing device 170 according to an embodiment of the present disclosure.

Meanwhile, when sensor data is transmitted from at least one of the plurality of area signal processing devices 170Z1 to 170Z4 to the signal processing device 170, it is preferable that multi-path routing is performed so that a network bottleneck does not occur.

Specifically, since the data reading speed or writing speed for the storage device (925 of FIG. 9B) is faster than the network speed at which sensor data is transmitted from at least one of the plurality of area signal processing devices 170Z1 to 170Z4 to the signal processing device 170, it is preferable that multi-path routing is performed so that a network bottleneck does not occur.

To this end, the signal processing device 170 according to the embodiment of the present disclosure performs multi-path routing based on a software defined network (SDN). Accordingly, it is possible to secure a stable network environment when reading or writing data from/to the storage device 925.

FIG. 9B is a drawing illustrating another example of a vehicle communication device according to the embodiment of the present disclosure.

Referring to FIG. 9B, the vehicle communication device 900b according to the embodiment of the present disclosure includes a plurality of area signal processing devices 170Z1 to 170Z4 and a signal processing device 170.

The plurality of area signal processing devices 170Z1 to 170Z4 and the signal processing device 170 are connected by wired cables CB1 to CB4.

Meanwhile, the plurality of area signal processing devices 170Z1 to 170Z4 may be connected by wired cables CBa to CBd, respectively.

Meanwhile, the signal processing device 170 according to an embodiment of the present disclosure includes a network controller 915 that controls multi-path routing for at least one of a plurality of area signal processing devices 170Z1 to 170Z4, and a storage device 925 that stores data received through multi-path routing.

The signal processing device 170 according to ab embodiment of the present disclosure may further include a storage device controller 920 that controls the storage device 925.

Since the data reading speed or writing speed for the storage device 925 is faster than the network speed at which sensor data is transmitted from at least one of the plurality of area signal processing devices 170Z1 to 170Z4 to the signal processing device 170, it is preferable that multi-path routing is performed so that a network bottleneck does not occur.

Meanwhile, the network controller 915 controls to receive a portion of the sensor data from a first area signal processing device 170Z1 among the plurality of area signal processing devices 170Z1 to 170Z4, from the first area signal processing device 170Z1, and receive the other portion of the sensor data via at least one area signal processing device 170Z1 to 170Z4 excluding the first area signal processing device 170Z1 or directly receive.

Accordingly, a stable network environment may be secured when reading or writing data from/to the storage device 925. Furthermore, data may be transmitted to the storage device 925 by using a plurality of paths. Meanwhile, data may be transmitted by dynamically changing the network configuration.

The sensor data at this time may include at least one of camera data, lidar data, radar data, vehicle direction data, vehicle location data (GPS data), vehicle angle data, vehicle speed data, vehicle acceleration data, vehicle inclination data, vehicle forward/backward movement data, battery data, fuel data, tire data, vehicle lamp data, in-vehicle temperature data, or in-vehicle humidity data.

In the drawing, it is illustrated that camera data from a camera 195a and lidar data from a lidar 196 are input to a first area signal processing device 170Z1, and the camera data and lidar data are transmitted to the signal processing device 170 via a second area signal processing device 170Z2, a third area signal processing device 170Z3, etc.

Meanwhile, the network controller 915 may control data, among the sensor data from the first area signal processing device 170Z1, that is not time-critical data to be received directly from the first area signal processing device 170Z1.

In the drawing, it is illustrated that non-time critical data that is not time-critical data, among the sensor data from the first area signal processing device 170Z1, is directly received from the first area signal processing device 170Z1 to the signal processing device 170.

Meanwhile, the network controller 915 may control the time critical data, among the sensor data from the first area signal processing device 170Z1, to be received via at least one area signal processing device 170Z1 to 170Z4 excluding the first area signal processing device 170Z1, or to be received directly.

In the drawing, it is illustrated that a portion of the time-critical data, among the sensor data from the first area signal processing device 170Z1, is transmitted to the signal processing device 170 via the second signal processing device 170Z2, another portion of the time-critical data, among the sensor data from the first area signal processing device 170Z1, is transmitted to the signal processing device 170 via the third signal processing device 170Z3, and another portion is directly received by the signal processing device 170.

At this time, the network controller 915 may set the network speed or bandwidth of the path of passing through at least one area signal processing device 170Z1 to 170Z4 excluding the first area signal processing device 170Z1 to be greater than the network speed or bandwidth of the path of directly transmitting to the signal processing device 170.

Accordingly, a stable network environment may be secured when reading or writing data from/to the storage device 925. Further, data may be transmitted to the storage device 925 by using a plurality of paths.

Meanwhile, the storage device controller 920 may control both the time critical data received through the network controller 915 and the non-time critical data that is not time-critical data to be stored in the storage device 925.

Meanwhile, the network controller 915 may monitor the network topology with a plurality of area signal processing devices 170Z1 to 170Z4, and perform bandwidth distribution and path setting for multi-path routing, based on the monitoring.

Meanwhile, the network controller 915 may set the bandwidth based on the path capacity, when setting the path for multi-path routing.

Meanwhile, the network controller 915 may perform multi-path routing based on software defined network (SDN).

Meanwhile, the network controller 915 does not perform path re-search, when performing multi-path routing. Accordingly, a stable network environment may be secured when reading or writing data from/to the storage device 925.

Meanwhile, various services executed within the plurality of area signal processing devices 170Z1 to 170Z4 or the signal processing device 170 of a vehicle may be forged or tampered due to external attacks, etc.

FIGS. 10 to 12 are flowcharts showing the operation method of the signal processing device according to various embodiments of the present disclosure. Detailed descriptions of overlapping contents with respect to FIGS. 10 to 12 will be omitted. Hereinafter, software may be interpreted to include the system, configuration, firmware, etc. of the vehicle 200. Meanwhile, in the present disclosure, the signal processing device 170 and the server 400 will be described based on wireless communication using the Over The Air (OTA) method. The signal processing device 170 may include an OTA update manager that controls the operation using the OTA method.

Referring to FIG. 10, the signal processing device 170 may check whether the update for the system of the vehicle 200 is incomplete, at operation S1001. For example, the signal processing device 170 may check whether the update for the flash bootloader (FBL) of the ECU is incomplete.

According to an embodiment, the signal processing device 170 may set the state of an update for the system of the vehicle 200. For example, the signal processing device 170 may compare information related to the version of the system of the vehicle 200 received from the server 400 with the current version of the system of the vehicle 200 to determine whether an update for the system of the vehicle 200 is necessary. At this time, if an update for the system of the vehicle 200 is necessary, the signal processing device 170 may set the state of the update for the system of the vehicle 200 to an incomplete state.

The signal processing device 170 may check the version and state of the system of the vehicle 200, at operation S1002. For example, the signal processing device 170 may perform a diagnosis for whether the system of the vehicle 200 is operating normally according to a certain diagnostic protocol (e.g., an On-board Diagnostics (OBD) protocol. At this time, the signal processing device 170 may determine the state of the system of the vehicle 200, based on a signal received from the ECU.

At operation S1003, the signal processing device 170 may determine whether recovery of the system of the vehicle 200 is necessary. For example, the signal processing device 170 may determine that recovery of the system of the vehicle 200 is necessary, based on a signal, which indicates an error for the system, that is received from the ECU. At this time, if an update of the system is performed while an error for the system has occurred, the update may not be completed normally. Accordingly, when an error occurs in the system of the vehicle 200, the signal processing device 170 may preferentially perform recovery of the system of the vehicle 200.

At operation S1004, if recovery of the system of the vehicle 200 is necessary, the signal processing device 170 may transmit first system information to the server 400. Here, the first system information may mean information corresponding to the recovery of the system of the vehicle 200. For example, the first system information may include the manufacturer of a hardware which the system is used for, the current version of the system of the vehicle 200, data indicating the recovery of the system, information on whether backup data used for the recovery of the system is stored, etc.

At operation S1005, the signal processing device 170 may transmit second system information to the server 400, if the recovery of the system of the vehicle 200 is unnecessary. Here, the second system information may mean information corresponding to the update of the system of the vehicle 200. For example, the second system information may include the manufacturer of the hardware which the system is used for, the current version of the system of the vehicle 200, etc.

At operation S1006, the signal processing device 170 may receive package data (hereinafter, system package) including data related to the system of the vehicle 200 from the server 400. Here, the package data may mean data encoded, compressed, and/or packaged in a format that the signal processing device 170 can process.

At operation S1007, the signal processing device 170 may determine whether the system package is a package related to recovery of the system of the vehicle 200. For example, if the system package includes dummy data, the signal processing device 170 may determine that the system package is a recovery-related package. For example, if the system package includes data used for recovery of the current version of the system of the vehicle 200, the signal processing device 170 may determine that the system package is a recovery-related package. For example, if the system package includes data used for updating the system of the vehicle 200 to the latest version, the signal processing device 170 may determine that the system package is an update-related package.

At operation S1008, if the system package is a package related to recovery of the system of the vehicle 200, the signal processing device 170 may determine that the recovery of the system of the vehicle 200 is performed.

At operation S1009, if the system package is a package related to update of the system of the vehicle 200, the signal processing device 170 may determine that the update of the system of the vehicle 200 is performed.

At operation S1010, the signal processing device 170 may determine whether the operation of the vehicle 200 is completely terminated. For example, the signal processing device 170 may determine whether the operation of the vehicle 200 is completely terminated, based on whether the engine of the vehicle 200 is turned off and the operation of the engine is terminated.

According to an embodiment, the signal processing device 170 may determine whether the operation of the vehicle 200 is completely terminated, by checking whether a predetermined condition for safety at the end of the operation of the vehicle 200 is satisfied, in the case where the vehicle 200 is turned off. At this time, the signal processing device 170 may determine that the operation of the vehicle 200 is completely terminated, in the case where all of a plurality of conditions related to safety at the end of the operation of the vehicle 200 are satisfied.

For example, in the case where the transmission of the vehicle 200 is in a parking state and the parking brake is in use, when the vehicle 200 is set to a locked state (arm), the signal processing device 170 may determine that the operation of the vehicle 200 is completely terminated.

For example, the signal processing device 170 may determine that the operation of the vehicle 200 is completely terminated, when the vehicle 200 is set to a locked state (arm) while both the door and the window of the vehicle 200 are closed.

For example, the signal processing device 170 may determine that the operation of the vehicle 200 is completely terminated, when the vehicle 200 is set to a locked state (arm) while it is determined that the vehicle 200 has no passenger inside the vehicle 200 by using an internal camera, sensor, etc.

According to an embodiment, the signal processing device 170 may output a notification that induces the complete termination of the operation of the vehicle 200. For example, the signal processing device 170 may output a notification that induces the passenger to get off and the vehicle to be set to a locked state (arm) through the display 180a, 180b.

According to an embodiment, the signal processing device 170 may output a notification related to the performance of an update for the system, when the vehicle 200 is turned off. At this time, the signal processing device 170 may determine whether to perform an update for the system, based on a user input received through the input interface 110. Meanwhile, the signal processing device 170 may perform an update for the system regardless of the user input, when the update for the system is an essential update for the operation of the vehicle 200.

The signal processing device 170 may determine whether the battery of the vehicle 200 is in a low level, at operation S1011. For example, the signal processing device 170 may monitor whether the level of the battery of the vehicle 200 is below a reference value corresponding to a low battery level.

The signal processing device 170 may perform recovery or update of the system of the vehicle 200, if the battery of the vehicle 200 is sufficient, at operation S1012. For example, the signal processing device 170 may perform recovery of the system by using backup data used for recovery of the system previously stored in the memory of the vehicle 200. For example, the signal processing device 170 may perform recovery or update of the system, based on data included in the system package received from the server 400.

The signal processing device 170 may check whether recovery or update of the system of the vehicle 200 is completed, at operation S1013. The signal processing device 170 may monitor whether the battery of the vehicle 200 is insufficient until recovery or update of the system of the vehicle 200 is completed.

The signal processing device 170 may output a notification related to the completion of the recovery or update of the system of the vehicle 200, when the recovery or update of the system of the vehicle 200 is completed. For example, the signal processing device 170 may transmit a notification related to the completion of the recovery or update of the system of the vehicle 200 to the mobile terminal 500. For example, when the vehicle 200 is turned on, the signal processing device 170 may output a notification related to the completion of the recovery or update of the system of the vehicle 200 through the display 180a, 180b.

The signal processing device 170 may change the state of the update for the system of the vehicle 200 to the completed state, when the recovery or update for the system of the vehicle 200 is completed.

Meanwhile, the signal processing device 170 may perform a rollback for the system, when the battery of the vehicle 200 is insufficient, at operation S1014. At this time, the signal processing device 170 may maintain the state of the update for the system of the vehicle 200 as an incomplete state. Through this, the signal processing device 170 may perform an operation for recovery or update for the system again, based on the fact that the state of the update for the system of the vehicle 200 is in an incomplete state, when the vehicle 200 is turned on.

When the signal processing device 170 performs a rollback for the system, the signal processing device 170 may store data used for recovery or update for the system in the memory of the vehicle 200. For example, the signal processing device 170 may store data included in the system package received from the server 400 in the memory of the vehicle 200. Through this, the signal processing device 170 may perform recovery or update of the system based on the data stored in the memory of the vehicle 200, even without receiving data from the server 400 again.

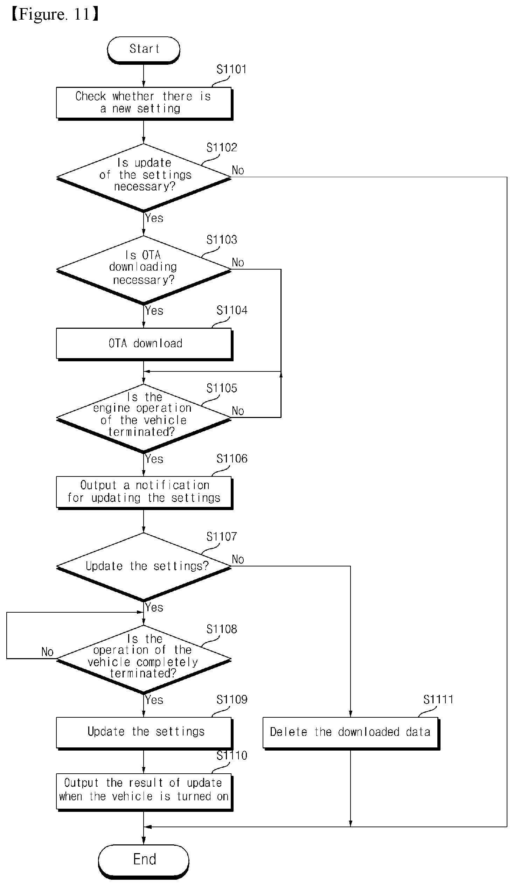

Referring to FIG. 11, the signal processing device 170 may check whether there is a new configuration for the vehicle 200, at operation S1101. Here, the configuration may be related to the system, service, function, application, etc. of the vehicle 200. For example, the signal processing device 170 may determine whether there is an update for the new configuration of the vehicle 200, based on the signal received from the server 400. For example, the signal processing device 170 may determine whether there is an update for new configurations of the vehicle 200, based on a signal received from the mobile terminal 500.

Meanwhile, the signal processing device 170 may check whether there is a new configuration for the vehicle 200 every time the vehicle 200 is turned on.

According to an embodiment, the signal processing device 170 may perform user authentication, in relation to the configurations for the vehicle 200. Here, the user authentication may mean authentication of whether a user is registered in a service for using the configurations for the vehicle 200. At this time, the signal processing device 170 may perform an operation of updating the configurations of the vehicle 200, when the user authentication is completed.

For example, the signal processing device 170 may transmit data used for user authentication to the server 400 through the transceiver 120. For example, the signal processing device 170 may transmit a signal requesting user authentication to the mobile terminal 500 through the transceiver 120.

At operation S1102, if it is determined that there are new configurations for the vehicle 200, the signal processing device 170 may determine whether an update of the configurations for the vehicle 200 is necessary. For example, the signal processing device 170 may compare the version of the new configurations subject to update with the current version of the configurations for the vehicle 200 to determine whether an update of the configurations for the vehicle 200 is necessary.

At operation S1103, if an update of the configurations for the vehicle 200 is necessary, the signal processing device 170 may determine whether downloading of data through the OTA method is necessary. For example, if the update of the configurations for the vehicle 200 is an update that activates or deactivates the use of a certain function, it may be determined that downloading of data through the OTA method is unnecessary. For example, the signal processing device 170 may determine that downloading of data through the OTA method is unnecessary, if the data to be downloaded is already stored in the memory of the vehicle 200. For example, the signal processing device 170 may determine that downloading of data through the OTA method is unnecessary if the data to be downloaded can be transmitted from the mobile terminal 500.

At operation S1104, if downloading of data through the OTA method is necessary, the signal processing device 170 may download data used for updating configurations for the vehicle 200 from the server 400. The signal processing device 170 may store the data downloaded from the server 400 in the memory of the vehicle 200.

At operation S1105, the signal processing device 170 may determine whether the engine operation is terminated by turning off the vehicle 200.

The signal processing device 170 may output a notification for updating the configurations, in the case where the engine operation of the vehicle 200 is terminated by turning off the vehicle 200, at operation S1106. For example, the signal processing device 170 may output a notification asking whether to update the configurations of the vehicle 200 through the display 180a, 180b.

The signal processing device 170 may determine whether to update the configurations of the vehicle 200, at operation S1107. For example, the signal processing device 170 may determine to update the configurations of the vehicle 200, based on the fact of receiving a user input approving the update of the configurations of the vehicle 200 through the input interface 110.

The signal processing device 170 may determine whether the operation of the vehicle 200 is completely terminated, at operation S1108.

The signal processing device 170 may perform an update of the configurations of the vehicle 200, when the operation of the vehicle 200 is completely terminated, at operation S1109.

The signal processing device 170 may output the result of performing an update for the configurations of the vehicle 200, when the vehicle 200 is turned on, at operation S1110.

Meanwhile, the signal processing device 170 may delete the downloaded data from the memory of the vehicle 200, when the update of the configurations of the vehicle 200 is not performed, at operation S1111. For example, the signal processing device 170 may determine not to perform an update of the configurations of the vehicle 200, based on the fact that a user input that disallows performing an update of the configurations of the vehicle 200 is received through the input interface 110.

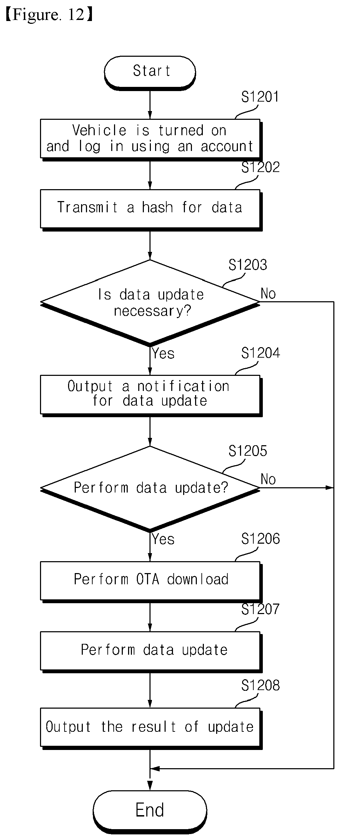

Referring to FIG. 12, the signal processing device 170 may log in to the server 400 by using an account corresponding to the vehicle 200, when the vehicle 200 is turned on, at operation S1201. The signal processing device 170 may perform a logout whenever the vehicle 200 is turned off, and may perform a log-in whenever the vehicle 200 is turned on.

The signal processing device 170 may transmit a hash for data used in software to the server 400, at operation S1202. In the present disclosure, it is described with respect to data for a navigation map, but is not limited thereto.

A hash corresponding to data for a navigation map may be stored in the memory of the vehicle 200. For example, the signal processing device 170 may generate a hash corresponding to data for a navigation map by using a certain hash function.

The server 400 may store a hash corresponding to data for the latest version of the navigation map. At this time, when a hash corresponding to data for a navigation map is received from the signal processing device 170, the server 400 may compare the latest version of the hash with the hash received from the signal processing device 170 to determine data to be used for updating a navigation map of the signal processing device 170 among the data for the latest version of the navigation map.

The signal processing device 170 may determine whether an update for data is necessary, at operation S1203. For example, if there is a difference between the latest version of the hash and the hash received from the signal processing device 170, the server 400 may transmit a signal indicating an update for the navigation map to the signal processing device 170. At this time, if a signal indicating an update for the navigation map is received from the server 400, the signal processing device 170 may determine that an update for the data is necessary.

According to an embodiment, the server 400 may determine whether there is a difference between a certain version of the hash compared to the last hash received from the signal processing device 170, and the latest version of the hash, in response to a login using an account corresponding to the vehicle 200. At this time, if there is a difference between the hash of the certain version and the latest version of the hash, the server 400 may transmit a signal indicating an update for the navigation map to the signal processing device 170. Through this, repeated transmission of the hash for the data of the signal processing device 170 may be omitted.

At operation S1204, if an update for the data is necessary, the signal processing device 170 may output a notification for the data. For example, the signal processing device 170 may output a notification asking whether to perform an update for the navigation map through the display 180a, 180b.

At operation S1205, the signal processing device 170 may determine whether to perform an update for the data. For example, the signal processing device 170 may determine to perform an update for the data related to the navigation map, based on the fact of receiving a user input approving the performance of an update for the navigation map through the input interface 110.

If it is determined to perform an update for the data, the signal processing device 170 may download the data used for the update from the server 400 through the OTA method, at operation S1206.

The signal processing device 170 may perform an update for the data, at operation S1207. For example, the signal processing device 170 may perform an update for the navigation map while the vehicle 200 is driving.

The signal processing device 170 may output the result of performing the update for the data, in response to the completion of the update for the data, at operation S1208. For example, the signal processing device 170 may display the updated navigation map through the display 180a, 180b.

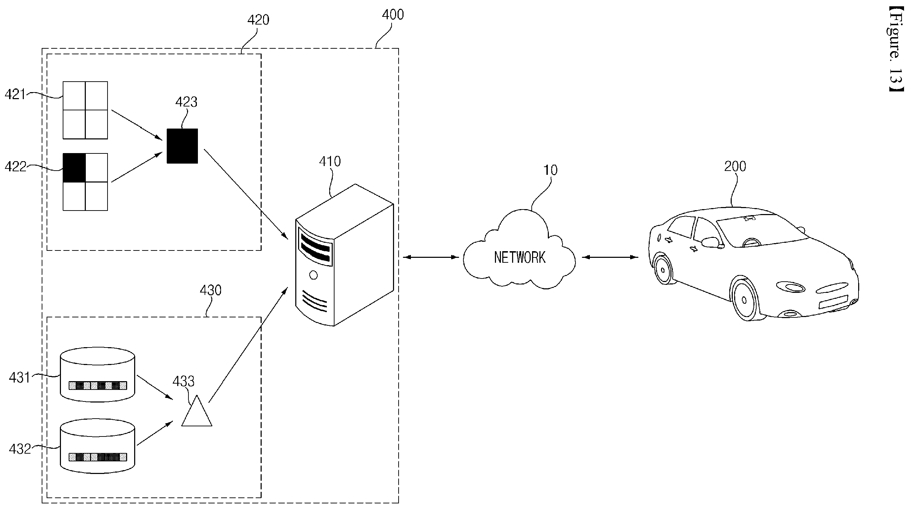

FIG. 13 is a drawing illustrating an example of a system according to an embodiment of the present disclosure.

Referring to FIG. 13, the server 400 may include a first server 410 that communicates with the vehicle 200, a second server 420 that generates data used for updating a system, a third server 430 that generates data used for updating vehicle data, and the like. The first server 410, the second server 420, and/or the third server 430 may be configured as one server or may be configured as separate servers that are distinct from each other.

The second server 420 may extract data 423 corresponding to a difference between data 421 related to the version of the system received from the vehicle 200 and data 422 related to the latest version of the system. For example, the second server 420 may extract data 423, by using an incremental update method.

The third server 430 may extract data 433 to be used for updating the navigation map, based on a difference between the hash 431 received from the vehicle 200 and the hash 432 corresponding to the data for the latest version of the navigation map.

When using the hash for updating a software, the data size of the hash is smaller than that of the data used for the update, so that the size of the data transmitted between the vehicle 200 and the server 400 may be reduced. In addition, when the vehicle 200 transmits the hash corresponding to an actual data, the server 400 may accurately check the data currently used in the vehicle 200, compared to the case of simply transmitting information related to the software version, so that the extraction of data required for updating the software may be optimized.

The first server 410 may transmit data 423, 433 used for updating the software to the vehicle 200 through the network 10 by using the OTA method. The vehicle 200 may perform an update for the software by using data 423, 433 received from the server 400.

The server 400 may store data for the vehicle 200. For example, the server 400 may store a list including vehicle information number VIN of the vehicle 200 that requested an update for the software. For example, the server 400 may store a list including the vehicle information number VIN of the vehicle 200 that requested a recovery for the software. Through this, the server 400 may manage a history related to update and/or recovery for the software.

The server 400 may provide an update for the software, based on the data for the vehicle 200. For example, the server 400 may provide data for update and/or recovery for a certain number of vehicles 200. At this time, if the software update and/or recovery is completed normally for a certain number of vehicles 200, data for update and/or recovery of software may be provided for the subsequent vehicles 200. Meanwhile, if the update and/or recovery of software is not normally completed for a certain number of vehicles 200, the update and/or recovery of software may be stopped.

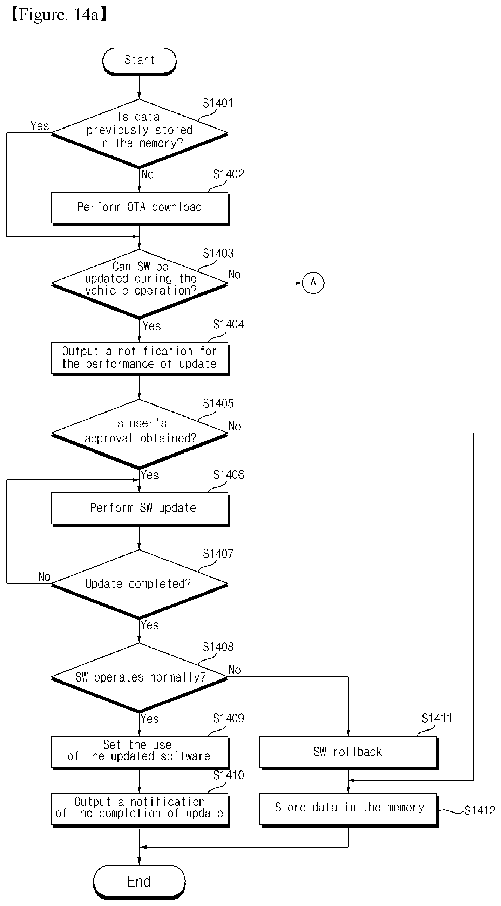

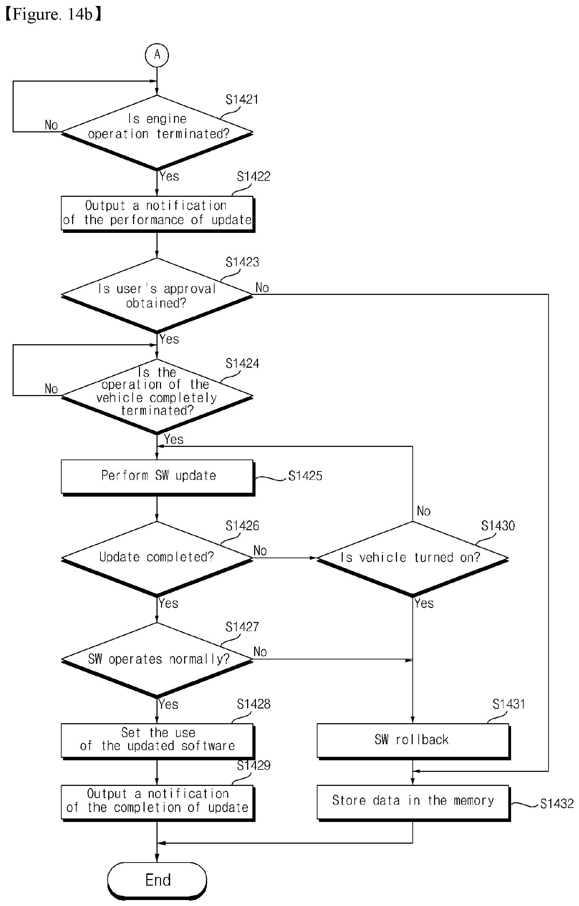

FIGS. 14A and 14B are flowcharts showing an operation method of a signal processing device according to an embodiment of the present disclosure. Detailed descriptions of contents overlapping with those described in FIGS. 10 to 12 will be omitted. At least some of the operations of FIGS. 14A and 14B may be applied to at least one of FIGS. 10 to 12.

Referring to FIG. 14A, the signal processing device 170 may determine whether data used for software update is previously stored in the memory of the vehicle 200, at operation S1401.

At operation S1402, when data used for updating the software is not stored in the memory of the vehicle 200, the signal processing device 170 may download data used for updating the software from the server 400 through the OTA method.

At operation S1403, the signal processing device 170 may determine whether a software subject to update is a software which is preset to be able to be updated while the vehicle 200 is in operation. If predetermined software subject to update is software related to the driving of the vehicle 200, the predetermined software may be preset to not be updated while the vehicle 200 is in operation.

According to an embodiment, the signal processing device 170 may determine whether the software subject to update is a software which is preset to be able to be updated while the vehicle 200 is in operation, based on a certain standard related to the safety of the vehicle 200. For example, a certain standard related to the safety of the vehicle 200 may be Automotive Safety Integrity Level (ASIL).

At operation S1404, if the software subject to update is software that can be updated while the vehicle 200 is in operation, the signal processing device 170 may output a notification related to the performance of the software update.

At operation S1405, the signal processing device 170 may determine whether user's approval for the software update is obtained. For example, the signal processing device 170 may determine that the user's approval for the software update is obtained, based on the fact of receiving the user input approving the performance of the software update through the input interface 110.

At operation S1406, if the user's approval for the software update is obtained, the signal processing device 170 may perform the software update.

The signal processing device 170 may check whether the update for the software is completed, at operation S1407.

At operation S1408, if the update for the software is completed, the signal processing device 170 may check whether the updated software operates normally. For example, the signal processing device 170 may check whether the updated software operates normally, by using a certain diagnostic protocol.

At operation S1409, if the updated software operates normally, the signal processing device 170 may set the use of the updated software.

At operation S1410, the signal processing device 170 may output a notification related to the completion of the software update. For example, the signal processing device 170 may transmit a notification related to the completion of the software update to the mobile terminal 500. For example, the signal processing device 170 may output a notification of the completion of the software update through the display 180a, 180b, when the vehicle 200 is turned on.

At operation S1411, if the updated software does not operate normally, the signal processing device 170 may perform a rollback for the software.

At operation S1412, the signal processing device 170 may store data used for the software update in the memory of the vehicle 200. Through this, the signal processing device 170 may perform an update for the software again, based on the data stored in the memory of the vehicle 200, even if it does not receive data from the server 400 again.

Meanwhile, referring to FIG. 14B, if the software subject to update is software that cannot be updated while the vehicle 200 is in operation, the signal processing device 170 may determine whether the engine operation is terminated by turning off the vehicle 200, at operation S1421.

At operation S1422, if the engine operation is terminated by turning off the vehicle 200, the signal processing device 170 may output a notification related to the performance of the software update.

At operation S1423, the signal processing device 170 may determine whether the user's approval for the software update is obtained.

At operation S1424, if the user's approval for the software update is obtained, the signal processing device 170 may determine whether the operation of the vehicle 200 is completely terminated.

The signal processing device 170 may perform an update for the software, if the operation of the vehicle 200 is completely terminated, at operation S1425.

At operation S1426, the signal processing device 170 may determine whether the update for the software is completed.

At operation S1427, if the update for the software is completed, the signal processing device 170 may check whether the updated software operates normally.

At operation S1428, if the updated software operates normally, the signal processing device 170 may set the use of the updated software.

At operation S1429, the signal processing device 170 may output a notification related to the completion of the software update.

Meanwhile, at operation S1430, if the update for the software is not completed, the signal processing device 170 may check whether the vehicle 200 is turned on.

The signal processing device 170 may perform a rollback for the software, if the updated software does not operate normally, or if the vehicle is turned on before the update for the software is completed, at operation S1431.

The signal processing device 170 may store data used for the update for the software in the memory of the vehicle 200, at operation S1432.

As described above, according to at least one embodiment of the present disclosure, software updates can be performed in consideration of conditions related to safety during operation of the vehicle 200, thereby minimizing the impact on the driving of the vehicle 200.

In addition, according to at least one embodiment of the present disclosure, the update on the software can be performed in a state where the operation of the vehicle is completely terminated, thereby enabling software updates to be performed more safely.

In addition, according to at least one embodiment of the present disclosure, the amount of data downloaded wirelessly for the software updates can be minimized.

In addition, according to at least one embodiment of the present disclosure, software can be updated according to an optimized process, while considering the state of the vehicle 200.

Referring to FIGS. 1 to 14B, a signal processing device according to an embodiment of the present disclosure includes a processor configured to process data received from a server through Over The Air (OTA) method, in which the processor determines whether a software subject to update based on the data received from the server is a predetermined software which is previously set to be able to be updated while a vehicle is in operation, if the software subject to update is the predetermined software, performs an update for the software subject to update, based on the data received from the server, if the software subject to update is not the predetermined software, determines whether a predetermined condition for safety at the end of the operation of the vehicle is satisfied, and in response to the satisfaction of the predetermined condition, performs the update for the software subject to update.

In addition, according to an aspect of the present disclosure, the processor determines whether the software subject to update is the predetermined software, based on an Automotive Safety Integrity Level (ASIL).

In addition, according to an aspect of the present disclosure, if the software subject to update is not the predetermined software, the processor outputs a notification that the update is performed for the software subject to update, based on the vehicle that is turned off, and in response to a reception of a user input that approves an update for the software subject to update, determines whether the predetermined condition is satisfied.

In addition, according to an aspect of the present disclosure, if the vehicle is set to a locked state (arm), in a state where a first condition on the safety in which a transmission and a parking brake of the vehicle correspond to parking of the vehicle after the vehicle is turned off is satisfied, the processor determines that the predetermined condition is satisfied.

In addition, according to an aspect of the present disclosure, the processor determines that the predetermined condition is satisfied, when the vehicle is set to a locked state (arm) in a state where a second condition on the safety in which all doors and windows of the vehicle are closed is satisfied.

In addition, according to an aspect of the present disclosure, if the vehicle is set to a locked state (arm), in a state where a third condition on the safety in which a passenger does not exist inside the vehicle is satisfied, based on data from at least one of an internal camera or a sensor of the vehicle, the processor determines that the predetermined condition is satisfied.

In addition, according to an aspect of the present disclosure, the processor outputs a notification that induces the passenger to get off, when the third condition is not satisfied.

In addition, according to an aspect of the present disclosure, when the vehicle is turned on while performing an update for the software which is an update target in response to the satisfaction of the predetermined condition, the processor performs a rollback for the software which is an update target.

In addition, according to an aspect of the present disclosure, when the vehicle is turned on after performing an update for the software subject to update in response to the satisfaction of the predetermined condition, the processor outputs a result of performing the update for the software subject to update.

In addition, according to an aspect of the present disclosure, when an error occurs in the software subject to update, the processor transmits information corresponding to a recovery of the software to the server, and when package data related to the recovery of the software subject to update is received from the server, performs a recovery for the software subject to update.

In addition, according to an aspect of the present disclosure, the processor transmits a hash for data used in a first software to the server, based on the vehicle which is turned on, and determines whether an update for the first software is necessary, based on a response to the transmission of the hash received from the server.

A method of operating a signal processing device according to an embodiment of the present disclosure includes determining whether a software subject to update based on a data received from a server through Over The Air (OTA) method is a predetermined software which is previously set to be able to be updated while a vehicle is in operation; performing an update for the software which is an update target, based on the data received from the server, if the software subject to update is the predetermined software; determining whether a predetermined condition for safety at the end of the operation of the vehicle is satisfied, if the software subject to update is not the predetermined software; and performing the update for the software which is an update target, in response to the satisfaction of the predetermined condition.

In addition, according to an aspect of the present disclosure, determining whether a software subject to update is the predetermined software includes determining whether the software subject to update is the predetermined software, based on an Automotive Safety Integrity Level (ASIL).

In addition, according to an aspect of the present disclosure, determining whether determining whether a predetermined condition on safety is satisfied includes: outputting a notification that the update is performed for the software which is an update target, based on the vehicle that is turned off, if the software subject to update is not the predetermined software, and determining whether the predetermined condition is satisfied, in response to a reception of a user input that approves the update for the software subject to update.

In addition, according to an aspect of the present disclosure, determining whether the predetermined condition for safety is satisfied includes: determining that the predetermined condition is satisfied, when the vehicle is set to a locked state (arm), in a state where at least one condition is satisfied from among a first condition on the safety in which a transmission and a parking brake of the vehicle correspond to parking of the vehicle after the vehicle is turned off, a second condition on the safety in which all doors and windows of the vehicle are closed, or a third condition on the safety in which a passenger does not exist inside the vehicle, based on data from at least one of an internal camera or a sensor of the vehicle.

In addition, according to an aspect of the present disclosure, the method further includes performing a rollback for the software subject to update, when the vehicle is turned on while performing an update for the software subject to update in response to the satisfaction of the predetermined condition.

In addition, according to an aspect of the present disclosure, the method further includes outputting a result of performing the update for the software subject to update, when the vehicle is turned on after performing the update for the software subject to update in response to the satisfaction of the predetermined condition.

In addition, according to an aspect of the present disclosure, the method further includes transmitting information corresponding to a recovery of the software to the server, when an error occurs in the software subject to update; and performing a recovery for the software subject to update, when package data related to the recovery of the software subject to update is received from the server.

In addition, according to an aspect of the present disclosure, the method further includes transmitting a hash for data used in a first software to the server, based on the vehicle which is turned on, and determining whether an update for the first software is necessary, based on a response to the transmission of the hash received from the server.

A vehicle control device according to an embodiment of the present disclosure includes a signal processing device having a transceiver that communicates with a server through Over The Air (OTA) method, a memory that stores data received from the server, and a processor that processes the data received from the server, in which the signal processing device determines whether a software subject to update based on the data received from the server is a predetermined software which is previously set to be able to be updated while a vehicle is in operation, if the software subject to update is the predetermined software, performs an update for the software which is an update target, based on the data received from the server, if the software subject to update is not the predetermined software, determines whether a predetermined condition for safety at the end of the operation of the vehicle is satisfied, and in response to the satisfaction of the predetermined condition, performs the update for the software subject to update.

Since the accompanying drawings are merely for easily understanding embodiments disclosed herein, it should be understood that the technical spirit disclosed herein is not limited by the accompanying drawings, and all changes, equivalents or substitutions are included in the spirit and technical scope of the present disclosure.

Meanwhile, a method of operation of the present disclosure can also be embodied as processor readable code on a processor-readable recording medium. The processor-readable recording medium includes all kinds of recording apparatuses storing data that can be read by a processor. Examples of the processor-readable recording medium is ROM, RAM, CD-ROM, magnetic tapes, floppy disks, optical data storage apparatuses, and, including those that are implemented in the form of carrier waves such as data transmission through the Internet. In addition, the processor-readable recording medium is dispersed in computer systems connected through a network, so that the processor-readable code can be stored and executed in a distributed fashion.

Although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the technical spirit or scope of the present disclosure.

## Claims

1. A signal processing device comprising:
a processor configured to process data received from a server through Over The Air (OTA) method,
wherein the processor is configured to:
determine whether a software subject to update based on the data received from the server is a predetermined software which is previously set to be able to be updated while a vehicle is in operation,
if the software subject to update is the predetermined software, perform an update for the software subject to update, based on the data received from the server,
if the software subject to update is not the predetermined software, determine whether a predetermined condition for safety at the end of the operation of the vehicle is satisfied, and
in response to the satisfaction of the predetermined condition, perform the update for the software subject to update.

2. The signal processing device of claim 1, wherein the processor is configured to determine whether the software subject to update is the predetermined software, based on an Automotive Safety Integrity Level (ASIL).

3. The signal processing device of claim 1, wherein, if the software subject to update is not the predetermined software, the processor is configured to:
output a notification that the update is performed for the software subject to update, based on the vehicle that is turned off, and
in response to a reception of a user input that approves the update for the software subject to update, determine whether the predetermined condition is satisfied.

4. The signal processing device of claim 1, wherein, if the vehicle is set to a locked state (arm), in a state where a first condition on the safety in which a transmission and a parking brake of the vehicle correspond to parking of the vehicle after the vehicle is turned off is satisfied, the processor is configured to determine that the predetermined condition is satisfied.

5. The signal processing device of claim 1, wherein the processor is configured to determine that the predetermined condition is satisfied, when the vehicle is set to a locked state (arm) in a state where a second condition on the safety in which all doors and windows of the vehicle are closed is satisfied.

6. The signal processing device of claim 1, wherein, if the vehicle is set to a locked state (arm), in a state where a third condition on the safety in which a passenger does not exist inside the vehicle is satisfied, based on data from at least one of an internal camera or a sensor of the vehicle, the processor is configured to determine that the predetermined condition is satisfied.

7. The signal processing device of claim 6, wherein the processor is configured to output a notification that induces the passenger to get off, when the third condition is not satisfied.

8. The signal processing device of claim 1, wherein, when the vehicle is turned on while performing the update for the software subject to update in response to the satisfaction of the predetermined condition, the processor is configured to perform a rollback for the software subject to update.

9. The signal processing device of claim 1, wherein, when the vehicle is turned on after performing the update for the software subject to update in response to the satisfaction of the predetermined condition, the processor is configured to output a result of performing the update for the software subject to update.

10. The signal processing device of claim 1, wherein the processor is configured to:
when an error occurs in the software subject to update, transmit information corresponding to a recovery of the software to the server, and
when package data related to the recovery of the software subject to update is received from the server, performs a recovery for the software subject to update.

11. The signal processing device of claim 1, wherein the processor is configured to:
transmit a hash for data used in a first software to the server, based on the vehicle which is turned on, and
determine whether an update for the first software is necessary, based on a response to the transmission of the hash received from the server.

12. A method of operating a signal processing device, the method comprising:
determining whether a software subject to update based on a data received from a server through Over The Air (OTA) method is a predetermined software which is previously set to be able to be updated while a vehicle is in operation;
performing an update for the software subject to update, based on the data received from the server, if the software subject to update is the predetermined software;
determining whether a predetermined condition for safety at the end of the operation of the vehicle is satisfied, if the software subject to update is not the predetermined software; and
performing the update for the software subject to update, in response to the satisfaction of the predetermined condition.

13. The method of claim 12, wherein determining whether the software subject to update is the predetermined software includes determining whether the software subject to update is the predetermined software, based on an Automotive Safety Integrity Level (ASIL).

14. The method of claim 12, wherein determining whether the predetermined condition for safety is satisfied includes:
outputting a notification that the update is performed for the software subject to update, based on the vehicle that is turned off, if the software subject to update is not the predetermined software, and
determining whether the predetermined condition is satisfied, in response to a reception of a user input that approves the update for the software subject to update.

15. The method of claim 12, wherein determining whether the predetermined condition for safety is satisfied includes:
determining that the predetermined condition is satisfied, when the vehicle is set to a locked state (arm), in a state where at least one condition is satisfied from among a first condition on the safety in which a transmission and a parking brake of the vehicle correspond to parking of the vehicle after the vehicle is turned off, a second condition on the safety in which all doors and windows of the vehicle are closed, or a third condition on the safety in which a passenger does not exist inside the vehicle, based on data from at least one of an internal camera or a sensor of the vehicle.

16. The method of claim 12, further comprising: performing a rollback for the software subject to update, when the vehicle is turned on while performing the update for the software subject to update in response to the satisfaction of the predetermined condition.

17. The method of claim 12, further comprising outputting a result of performing the update for the software subject to update, when the vehicle is turned on after performing the update for the software subject to update in response to the satisfaction of the predetermined condition.

18. The method of claim 12, further comprising:
transmitting information corresponding to a recovery of the software to the server, when an error occurs in the software subject to update; and
performing a recovery for the software subject to update, when package data related to the recovery of the software subject to update is received from the server.

19. The method of claim 12, further comprising
transmitting a hash for data used in a first software to the server, based on the vehicle which is turned on, and
determining whether an update for the first software is necessary, based on a response to the transmission of the hash received from the server.

20. A vehicle control device comprising the signal processing device of any one of claims 1 to 11.
